# EUROPEAN PATENT APPLICATION

(11) **EP 3 327 551 A1**
(43) Date of publication of application: **30.05.2018**
(21) Application number: 17203384.7
(22) Date of filing: 23.11.2017
(51) Int. Cl.: G06F 3/01, G06F 3/0481

(54) **ELECTRONIC DEVICE FOR DISPLAYING IMAGE AND METHOD FOR CONTROLLING THE SAME**

(30) Priority: 23.11.2016 KR 20160156788
(71) Applicant: Samsung Electronics Co., Ltd., Gyeonggi-do 16677 (KR)
(72) Inventor: MYUNG, In-Sik, Suwon-si, Gyeonggi-do, 16677 (KR); JUNG, Jong-Woo, Suwon-si, Gyeonggi-do, 16677 (KR); CHOI, In-Young, Suwon-si, Gyeonggi-do, 16677 (KR); KWON, Oh-Yoon, Suwon-si, Gyeonggi-do, 16677 (KR); NOH, Yoo-Mi, Suwon-si, Gyeonggi-do, 16677 (KR); LEE, Jung-Won, Suwon-si, Gyeonggi-do, 16677 (KR)
(74) Representative: HGF Limited

(57) **Abstract**

An electronic device is provided. The electronic device includes a display and a processor configured to control to display a first virtual reality (VR) screen including a first object on the display so that a user recognizes the first object as if the first object is positioned at a first distance from the user, in response to detecting an invocation event for a second object, control to display a second VR screen including the second object on the display so that the user recognizes the second object as if the second object is positioned at a second distance from the user, and in response to receiving a control command for the second object, control to display, on the display, a third VR screen comprising the second object to which the control command is applied.

## Description

### TECHNICAL FIELD

The present disclosure relates to electronic devices for displaying images and methods for controlling the same.

### BACKGROUND

Among electronic devices are ones wearable on a human body. Such electronic devices are typically called wearable devices. Head mounted displays (HMDs) are among such wearable electronic devices.

An HMD is worn on a user's body part (e.g., his/her head), providing the user with a virtual reality (VR) or augmented reality (AR) environment. The VR environment may include, e.g., various user interfaces that may display screens to implement VR or may implement VR.

Various HMDs may sense an acceleration, an angular acceleration, or the direction of a tilt and display a screen corresponding to sensed information according to the related art. Accordingly, an HMD may change and display screens corresponding to the user's movement. The user may receive a real-like service by viewing the screens changed.

The above information is presented as background information only to assist with an understanding of the present disclosure. No determination has been made, and no assertion is made, as to whether any of the above might be applicable as prior art with regard to the present disclosure.

### SUMMARY

Various virtual reality (VR) devices display a cursor for choosing a certain object according to the related art. Clicking on a button of the electronic device with the cursor positioned on a particular object enables the electronic device to execute an event set for the particular object. Such electronic devices, however, provide a configuration for executing an event when a particular object is designated but lack functions to enable manipulation or preview of the object according to the related art. No disclosure has yet been made as to an independent work space for manipulating a particular object in a VR service.

Aspects of the present disclosure are to address at least the above-mentioned problems and/or disadvantages and to provide at least the advantages described below. Accordingly, an aspect of the present disclosure is to provide a function to enable manipulation or preview of a particular object.

Another aspect of the present disclosure is to provide an independent work space for providing a function to enable manipulation or preview of a particular object.

In accordance with an aspect of the present disclosure, an electronic device is provided. The electronic device includes a display and a processor configured to control to display a first virtual reality (VR) screen including a first object on the display so that a user recognizes the first object as if the first object is positioned at a first distance from the user, in response to detecting an invocation event for a second object, control to display a second VR screen including the second object on the display so that the user recognizes the second object as if the second object is positioned at a second distance from the user, and in response to receiving a control command for the second object, control to display, on the display, a third VR screen comprising the second object to which the control command is applied.

In accordance with an aspect of the present disclosure, a method for controlling an electronic device is provided. The method includes displaying a first virtual reality (VR) screen including a first object so that a user recognizes the first object as if the first object is positioned at a first distance from the user, in response to detecting an invocation event for a second object, displaying a second VR screen including the second object so that the user recognizes the second object as if the second object is positioned at a second distance from the user, and in response to receiving a control command for the second object, displaying a third VR screen comprising the second object to which the control command is applied.

In accordance with an aspect of the present disclosure, an electronic device is provided. The electronic device includes a display and a processor configured to control to display a first virtual reality (VR) screen including a first object on the display so that a user recognizes the first object as if the first object is positioned at a first distance from the user, in response to detecting an invocation event for a work space, display a second VR screen including a first work space on the display so that the user recognizes the first work space as if the first work space is positioned at a second distance from the user, control to apply a received control command to a second object included in the first work space, and control to display a third VR screen including the second object on the display.

In accordance with an aspect of the present disclosure, a method for controlling an electronic device is provided. The method includes displaying a first virtual reality (VR) screen including a first object so that a user recognizes the first object as if the first object is positioned at a first distance from the user, in response to detecting an invocation event for a work space, displaying a second VR screen including a first work space so that the user recognizes the first work space as if the first work space is positioned at a second distance from the user, applying a received control command to a second object included in the first work space, and displaying a third VR screen including the second object on the display.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be from the following description taken in conjunction with the accompanying drawings, in which:
FIG. 1 is a block diagram illustrating an electronic device and a network according to an embodiment of the present disclosure;
FIG. 2 is a block diagram illustrating an electronic device according to an embodiment of the present disclosure;
FIG. 3 is a block diagram illustrating a program module according to an embodiment of the present disclosure;
FIG. 4A is a perspective view illustrating an example of an electronic device according to an embodiment of the present disclosure;
FIG. 4B is a view illustrating an example of display by an electronic device according to an embodiment of the present disclosure;
FIG. 4C is a concept view illustrating a screen viewed by a user according to an embodiment of the present disclosure;
FIG. 5A is a perspective view illustrating an example in which a user wears a head mounted device (HMD) according to an embodiment of the present disclosure;
FIGS. 5B, 5C, 5D, and 5E are concept views illustrating examples of screen changes on an electronic device according to an embodiment of the present disclosure;
FIGS. 6A and 6B are concept views illustrating operations of an electronic device according to an embodiment of the present disclosure;
FIGS. 7A and 7B are flowcharts illustrating a method for controlling an electronic device according to an embodiment of the present disclosure;
FIGS. 8A, 8B, and 8C are concept views illustrating operations of an electronic device according to an embodiment of the present disclosure;
FIG. 9 is a concept view illustrating operations of an electronic device according to an embodiment of the present disclosure;
FIG. 10 is a flowchart illustrating a method for controlling an electronic device according to an embodiment of the present disclosure;
FIGS. 11A and 11B are concept views illustrating operations of an electronic device according to embodiments of the present disclosure;
FIG. 12 is a flowchart illustrating a method for controlling an electronic device according to an embodiment of the present disclosure;
FIGS. 13A and 13B are concept views illustrating operations of an electronic device according to embodiments of the present disclosure;
FIG. 14 is a flowchart illustrating a method for controlling an electronic device according to an embodiment of the present disclosure;
FIGS. 15A, 15B, and 15C are concept views illustrating operations of an electronic device according to an embodiment of the present disclosure;
FIG. 16 is a flowchart illustrating a method for controlling an electronic device according to an embodiment of the present disclosure;
FIGS. 17A, 17B, 17C, and 17D are concept views illustrating operations of an electronic device according to an embodiment of the present disclosure;
FIG. 18 is a flowchart illustrating a method for controlling an electronic device according to an embodiment of the present disclosure;
FIG. 19 is a concept view illustrating an operation of an electronic device according to an embodiment of the present disclosure;
FIG. 20 is a concept view illustrating a system hierarchy according to an embodiment of the present disclosure;
FIG. 21 is a flowchart illustrating a method for controlling an electronic device and a server according to an embodiment of the present disclosure;
FIGS. 22A and 22B are concept views illustrating operations of an electronic device according to an embodiment of the present disclosure;
FIG. 23 is a flowchart illustrating a method for controlling an electronic device according to an embodiment of the present disclosure;
FIG. 24 is a concept view illustrating a work space according to an embodiment of the present disclosure;
FIG. 25 is a flowchart illustrating a method for controlling an electronic device according to an embodiment of the present disclosure;
FIG. 26 is a concept view illustrating a plurality of work spaces according to an embodiment of the present disclosure; and
FIG. 27 is a concept view illustrating operations on a work space according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, the terms "configured to" may be interchangeably used with other terms, such as "suitable for," "capable of," "modified to," "made to," "adapted to," "able to," or "designed to" in hardware or software in the context. Rather, the term "configured to" may mean that a device can perform an operation together with another device or parts. For example, the term "processor configured (or set) to perform A, B, and C" may mean a generic-purpose processor (e.g., a central processing unit (CPU) or application processor (AP)) that may perform the operations by executing one or more software programs stored in a memory device or a dedicated processor (e.g., an embedded processor) for performing the operations.

For example, examples of the electronic device according to embodiments of the present disclosure may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a Moving Picture Experts Group phase 1 or phase 2 (MPEG-1 or MPEG-2) audio layer 3 (MP3) player, a medical device, a camera, or a wearable device. The wearable device may include at least one of an accessory-type device (e.g., a watch, a ring, a bracelet, an anklet, a necklace, glasses, contact lenses, or a head-mounted device (HMD)), a fabric- or clothes-integrated device (e.g., electronic clothes), a body attaching-type device (e.g., a skin pad or tattoo), or a body implantable device. In some embodiments, examples of the smart home appliance may include at least one of a television, a digital versatile disc (DVD) player, an audio player, a refrigerator, an air conditioner, a cleaner, an oven, a microwave oven, a washer, a drier, an air cleaner, a set-top box, a home automation control panel, a security control panel, a television (TV) box (e.g., Samsung HomeSync™, Apple TV™, or Google TV™), a gaming console (Xbox™, PlayStation™), an electronic dictionary, an electronic key, a camcorder, or an electronic picture frame.

According to an embodiment of the present disclosure, the electronic device may include at least one of various medical devices (e.g., diverse portable medical measuring devices (a blood sugar measuring device, a heartbeat measuring device, or a body temperature measuring device), a magnetic resonance angiography (MRA) device, a magnetic resonance imaging (MRI) device, a computed tomography (CT) device, an imaging device, or an ultrasonic device), a navigation device, a global navigation satellite system (GNSS) receiver, an event data recorder (EDR), a flight data recorder (FDR), an automotive infotainment device, an sailing electronic device (e.g., a sailing navigation device or a gyro compass), avionics, security devices, vehicular head units, industrial or home robots, drones, automatic teller's machines (ATMs), point of sales (POS) devices, or internet of things (IoT) devices (e.g., a bulb, various sensors, a sprinkler, a fire alarm, a thermostat, a street light, a toaster, fitness equipment, a hot water tank, a heater, or a boiler). According to various embodiments of the disclosure, examples of the electronic device may at least one of part of a piece of furniture, building/structure or vehicle, an electronic board, an electronic signature receiving device, a projector, or various measurement devices (e.g., devices for measuring water, electricity, gas, or electromagnetic waves). According to embodiments of the present disclosure, the electronic device may be flexible or may be a combination of the above-enumerated electronic devices. According to an embodiment of the disclosure, the electronic devices are not limited to those described above. As used herein, the term "user" may denote a human or another device (e.g., an artificial intelligent electronic device) using the electronic device.

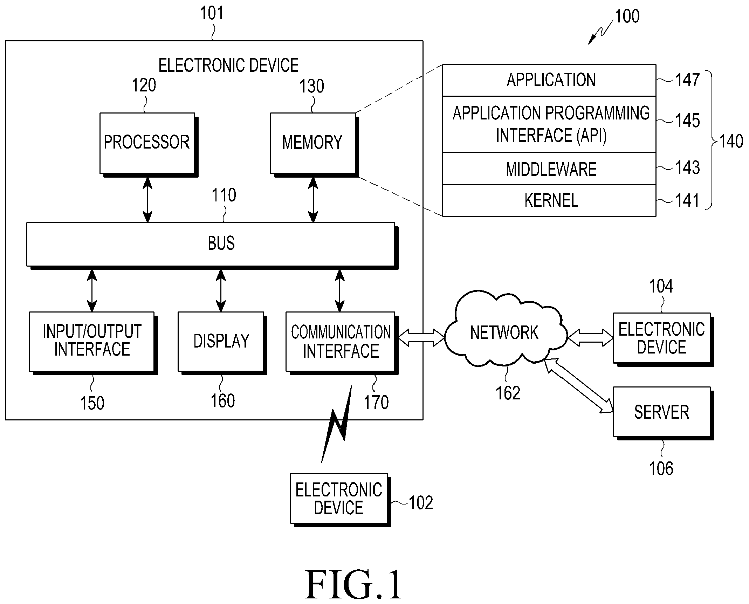

FIG. 1 is a block diagram illustrating an electronic device and a network according to an embodiment of the present disclosure.

Referring to FIG. 1, according to an embodiment of the present disclosure, an electronic device 101 is included in a network environment 100. The electronic device 101 may include a bus 110, a processor 120, a memory 130, an input/output interface 150, a display 160, and a communication interface 170. In some embodiments, the electronic device 101 may exclude at least one of the components or may add another component. The bus 110 may include a circuit for connecting the processor 120, the memory 130, the input/output interface 150, the display 160, and the communication interface 170 with one another and transferring communications (e.g., control messages or data) between the same. The processor 120 may include one or more of a CPU, an AP, or a communication processor (CP). The processor 120 may perform control on at least one of the other components of the electronic device 101, and/or perform an operation or data processing relating to communication.

The memory 130 may include a volatile and/or a non-volatile memory. For example, the memory 130 may store commands or data related to at least one other component of the electronic device 101. According to an embodiment of the present disclosure, the memory 130 may store software and/or a program 140. The program 140 may include, e.g., a kernel 141, middleware 143, an application programming interface (API) 145, and/or an application program (or "application") 147. At least a portion of the kernel 141, middleware 143, or API 145 may be denoted an operating system (OS). For example, the kernel 141 may control or manage system resources (e.g., the bus 110, processor 120, or the memory 130) used to perform operations or functions implemented in other programs (e.g., the middleware 143, API 145, or application 147). The kernel 141 may provide an interface that allows the middleware 143, the API 145, or the application 147 to access the individual components of the electronic device 101 to control or manage the system resources.

The middleware 143 may function as a relay to allow the API 145 or the application 147 to communicate data with the kernel 141. Further, the middleware 143 may process one or more task requests received from the application 147 in order of priority. For example, the middleware 143 may assign a priority of using system resources (e.g., bus 110, processor 120, or memory 130) of the electronic device 101 to the application 147 and process one or more task requests. The API 145 is an interface allowing the application 147 to control functions provided from the kernel 141 or the middleware 143. For example, the API 145 may include at least one interface or function (e.g., a command) for filing control, window control, image processing or text control. For example, the input/output interface 150 may transfer commands or data input from the user or other external device to other component(s) of the electronic device 101 or may output commands or data received from other component(s) of the electronic device 101 to the user or other external devices.

The display 160 may include, e.g., a liquid crystal display (LCD), a light emitting diode (LED) display, an organic light emitting diode (OLED) display, a microelectromechanical systems (MEMS) display, or an electronic paper display. The display 160 may display, e.g., various contents (e.g., text, images, videos, icons, or symbols) to the user. The display 160 may include a touchscreen and may receive, e.g., a touch, gesture, proximity or hovering input using an electronic pen or a body portion of the user. For example, the communication interface 170 may set up communication between the electronic device 101 and an external device (e.g., a first external electronic device 102, a second external electronic device 104, or a server 106). For example, the communication interface 170 may be connected with a network 162 through wireless communication or wired communication and may communicate with an external device (e.g., the second external electronic device 104 or the server 106).

The wireless communication may include cellular communication which uses at least one of, e.g., long term evolution (LTE), long term evolution- advanced (LTE-A), code division multiple access (CDMA), wideband code division multiple access (WCDMA), universal mobile telecommunication system (UMTS), wireless broadband (WiBro), or global system for mobile communication (GSM). According to an embodiment of the present disclosure, the wireless communication may include at least one of, e.g., Wi-Fi, bluetooth (BT), bluetooth low power (BLE), zigbee, near field communication (NFC), magnetic secure transmission (MST), radio frequency, or body area network (BAN). According to an embodiment of the present disclosure, the wireless communication may include global navigation satellite system (GNSS). The GNSS may be, e.g., global positioning system (GPS), global navigation satellite system (Glonass), Beidou navigation satellite system (hereinafter, "Beidou") or Galileo, or the European global satellite-based navigation system. Hereinafter, the terms "GPS" and the "GNSS" may be interchangeably used herein. The wired connection may include at least one of, e.g., universal serial bus (USB), high definition multimedia interface (HDMI), recommended standard (RS)-232, power line communication (PLC), or plain old telephone service (POTS). The network 162 may include at least one of telecommunication networks, e.g., a computer network (e.g., local area network (LAN) or wide area network (WAN)), Internet, or a telephone network.

The first and second external electronic devices 102 and 104 each may be a device of the same or a different type from the electronic device 101. According to an embodiment of the present disclosure, all or some of operations executed on the electronic device 101 may be executed on another or multiple other electronic devices (e.g., the first external electronic device 102, the second external electronic device 104, or the server 106). According to an embodiment of the present disclosure, when the electronic device 101 should perform some function or service automatically or at a request, the electronic device 101, instead of executing the function or service on its own or additionally, may request another device (e.g., the first external electronic device 102, the second external electronic device 104, or the server 106) to perform at least some functions associated therewith. The other electronic device (e.g., the first external electronic device 102, the second external electronic device 104, or the server 106) may execute the requested functions or additional functions and transfer a result of the execution to the electronic device 101. The electronic device 101 may provide a requested function or service by processing the received result as it is or additionally. To that end, a cloud computing, distributed computing, or client-server computing technique may be used, for example.

According to an embodiment of the present disclosure, the processor 120 may perform control to display a first virtual reality (VR) screen including a first object on the display 160 so that a user recognizes the first object as if the first object is positioned at a first distance from the user, perform control to, in response to detecting an invocation event for a second object, display a second VR screen including the second object on the display 160 so that the user recognizes the second object as if the second object is positioned at a second distance from the user, and perform control to, in response to receiving a control command for the second object, display a third VR screen where the control command has applied to the second object on the display 160.

According to an embodiment of the present disclosure, the second object may be set corresponding to the first object, and the processor 120 may perform control to display the second VR screen on the display 160 when the first object is designated.

According to an embodiment of the present disclosure, the second object may be an object that corresponds to the first object and that may be manipulated in three dimension (3D).

According to an embodiment of the present disclosure, in response to receiving a control command to an orientation of the second object, the processor 120 controls to display the third VR screen including the second object of which orientation is changed according to the control command.

According to an embodiment of the present disclosure, the second object may be an object obtained by changing a display property of the first object.

According to an embodiment of the present disclosure, the second object may be set independently from the first object.

According to an embodiment of the present disclosure, the processor 120 may perform control to, when displaying the first VR screen, display an image for a left eye and an image for a right eye corresponding to the first VR screen, when displaying the second VR screen, display an image for the left eye and an image for the right eye corresponding to the second VR screen, and when displaying the third VR screen, display an image for the left eye and an image for the right eye corresponding to the third VR screen.

According to an embodiment of the present disclosure, the processor 120 may detect the user's gesture and determine the control command corresponding to the gesture.

According to an embodiment of the present disclosure, the processor 120 may perform control to display a first VR screen including a first object on the display 160 so that a user recognizes the first object as if the first object is positioned at a first distance from the user, perform control to, in response to detecting an invocation event for a work space, display a second VR screen including a first work space on the display 160 so that the user recognizes the first work space as if the first work space is positioned at a second distance from the user, perform control to reflect an entered control command applied to a second object included in the first work space, and to display a third VR screen including the control command-reflected second object on the display 160.

According to an embodiment of the present disclosure, the processor 120 may detect the user's gesture and determine the control command corresponding to the gesture.

According to an embodiment of the present disclosure, the processor 120 may perform control to, in response to detecting the invocation event for the work space, display a second VR screen including the first work space and a second work space on the display 160 so that the user recognizes the second work space as if the second work space is positioned at a third distance from the user.

According to an embodiment of the present disclosure, the processor 120 may reflect that the control command is applied to an object of an activated work space of the first work space and the second work space.

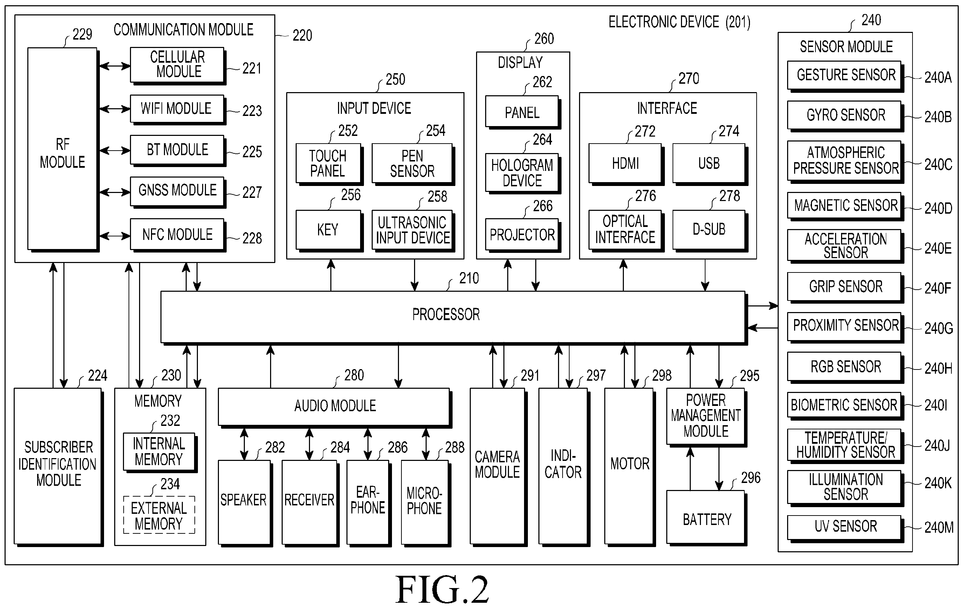

FIG. 2 is a block diagram illustrating an electronic device according to an embodiment of the present disclosure.

Referring to FIG. 2, an electronic device 201 may include the whole or part of the configuration of the electronic device 101 shown in FIG. 1. The electronic device 201 may include one or more processors (e.g., application processors (APs)) 210 (hereinafter "processor"), a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298. The processor 210 may control multiple hardware and software components connected to the processor 210 by running, e.g., an operating system or application programs, and the processor 210 may process and compute various data. The processor 210 may be implemented in, e.g., a system on chip (SoC). According to an embodiment of the present disclosure, the processor 210 may further include a graphic processing unit (GPU) and/or an image signal processor. The processor 210 may include at least some (e.g., cellular module 221) of the components shown in FIG. 2. The processor 210 may load a command or data received from at least one of other components (e.g., a non-volatile memory) on a volatile memory, process the command or data, and store resultant data in the non-volatile memory.

The communication module 220 may have the same or similar configuration to the communication interface 170. The communication module 220 may include, e.g., a cellular module 221, a Wi-Fi module 223, a bluetooth (BT) module 225, a GNSS module 227, an NFC module 228, and a radio frequency (RF) module 229. The cellular module 221 may provide voice call, video call, text, or Internet services through, e.g., a communication network. The cellular module 221 may perform identification or authentication on the electronic device 201 in the communication network using the subscriber identification module 224 (e.g., the SIM card). According to an embodiment of the present disclosure, the cellular module 221 may perform at least some of the functions provided by the processor 210. According to an embodiment of the present disclosure, the cellular module 221 may include a communication processor (CP). According to an embodiment of the present disclosure, at least some (e.g., two or more) of the cellular module 221, the Wi-Fi module 223, the BT module 225, the GNSS module 227, or the NFC module 228 may be included in a single integrated circuit (IC) or an IC package. The RF module 229 may communicate data, e.g., communication signals (e.g., RF signals). The RF module 229 may include, e.g., a transceiver, a power amp module (PAM), a frequency filter, a low noise amplifier (LNA), or an antenna. According to an embodiment of the present disclosure, at least one of the cellular module 221, the Wi-Fi module 223, the BT module 225, the GNSS module 227, or the NFC module 228 may communicate RF signals through a separate RF module. The subscriber identification module 224 may include, e.g., a card including a subscriber identification module, or an embedded SIM, and may contain unique identification information (e.g., an integrated circuit card identifier (ICCID) or subscriber information (e.g., an international mobile subscriber identity (IMSI)).

The memory 230 (e.g., the memory 130) may include, e.g., an internal memory 232 or an external memory 234. The internal memory 232 may include at least one of, e.g., a volatile memory (e.g., a dynamic RAM (DRAM), a static RAM (SRAM), a synchronous dynamic RAM (SDRAM), etc.) or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash, or a NOR flash), a hard drive, or solid state drive (SSD). The external memory 234 may include a flash drive, e.g., a compact flash (CF) memory, a secure digital (SD) memory, a micro-SD memory, a min-SD memory, an extreme digital (xD) memory, a multi-media card (MMC), or a memory stick™. The external memory 234 may be functionally or physically connected with the electronic device 201 via various interfaces.

For example, the sensor module 240 may measure a physical quantity or detect an operational state of the electronic device 201, and the sensor module 240 may convert the measured or detected information into an electrical signal. The sensor module 240 may include at least one of, e.g., a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red-green-blue (RGB) sensor), a biometric sensor 240I, a temperature/humidity sensor 240J, an illumination sensor 240K, or an Ultra Violet (UV) sensor 240M. Additionally or alternatively, the sensor module 240 may include, e.g., an e-nose sensor, an electromyography (EMG) sensor, an electroencephalogram (EEG) sensor, an electrocardiogram (ECG) sensor, an infrared (IR) sensor, an iris sensor, or a finger print sensor. The sensor module 240 may further include a control circuit for controlling at least one or more of the sensors included in the sensing module. According to an embodiment of the present disclosure, the electronic device 201 may further include a processor configured to control the sensor module 240 as part of the processor 210 or separately from the processor 210, and the electronic device 201 may control the sensor module 240 while the processor 210 is in a sleep mode.

The input unit 250 may include, e.g., a touch panel 252, a (digital) pen sensor 254, a key 256, or an ultrasonic input device 258. The touch panel 252 may use at least one of capacitive, resistive, infrared, or ultrasonic methods. The touch panel 252 may further include a control circuit. The touch panel 252 may further include a tactile layer and may provide a user with a tactile reaction. The (digital) pen sensor 254 may include, e.g., a part of a touch panel or a separate sheet for recognition. The key 256 may include e.g., a physical button, optical key or key pad. The ultrasonic input device 258 may sense an ultrasonic wave generated from an input tool through a microphone (e.g., microphone 288) to identify data corresponding to the sensed ultrasonic wave.

The display 260 (e.g., the display 160) may include a panel 262, a hologram device 264, a projector 266, and/or a control circuit for controlling the same. The panel 262 may be implemented to be flexible, transparent, or wearable. The panel 262, together with the touch panel 252, may be configured in one or more modules. According to an embodiment of the present disclosure, the panel 262 may include a pressure sensor (or pose sensor) that may measure the strength of a pressure by the user's touch. The pressure sensor may be implemented in a single body with the touch panel 252 or may be implemented in one or more sensors separate from the touch panel 252. The hologram device 264 may make three dimensional (3D) images (holograms) in the air by using light interference. The projector 266 may display an image by projecting light onto a screen. The screen may be, for example, located inside or outside of the electronic device 201. The interface 270 may include e.g., a high definition multimedia interface (HDMI) 272, a USB 274, an optical interface 276, or a D-subminiature (D-sub) 278. The interface 270 may be included in e.g., the communication interface 170 shown in FIG. 1. Additionally or alternatively, the interface 270 may include a mobile high-definition link (MHL) interface, a secure digital (SD) card/ multimedia card (MMC) interface, or an infrared data association (IrDA) standard interface.

The audio module 280 may convert, e.g., a sound signal into an electrical signal and vice versa. At least a part of the audio module 280 may be included in e.g., the input/output interface 150 as shown in FIG. 1. The audio module 280 may process sound information input or output through e.g., a speaker 282, a receiver 284, an earphone 286, or a microphone 288. For example, the camera module 291 may be a device for capturing still images and videos, and may include, according to an embodiment of the present disclosure, one or more image sensors (e.g., front and back sensors), a lens, an image signal processor (ISP), or a flash such as an LED or xenon lamp. The power manager module 295 may manage power of the electronic device 201. According to an embodiment of the present disclosure, the power manager module 295 may include a power management integrated circuit (PMIC), a charger IC, or a battery or fuel gauge. The PMIC may have a wired and/or wireless recharging scheme. The wireless charging scheme may include e.g., a magnetic resonance scheme, a magnetic induction scheme, or an electromagnetic wave based scheme, and an additional circuit, such as a coil loop, a resonance circuit, a rectifier, or the like may be added for wireless charging. The battery gauge may measure an amount of remaining power of the battery 296, a voltage, a current, or a temperature while the battery 296 is being charged. The battery 296 may include, e.g., a rechargeable battery or a solar battery.

The indicator 297 may indicate a particular state of the electronic device 201 or a part (e.g., the processor 210) of the electronic device, including e.g., a booting state, a message state, or recharging state. The motor 298 may convert an electric signal to a mechanical vibration and may generate a vibrational or haptic effect. The electronic device 201 may include a mobile TV supporting device (e.g., a GPU) that may process media data as per, e.g., digital multimedia broadcasting (DMB), digital video broadcasting (DVB), or mediaFlo™ standards. Each of the aforementioned components of the electronic device may include one or more parts, and a name of the part may vary with a type of the electronic device. According to various embodiments, the electronic device (e.g., the electronic device 201) may exclude some elements or include more elements, or some of the elements may be combined into a single entity that may perform the same function as by the elements before combined.

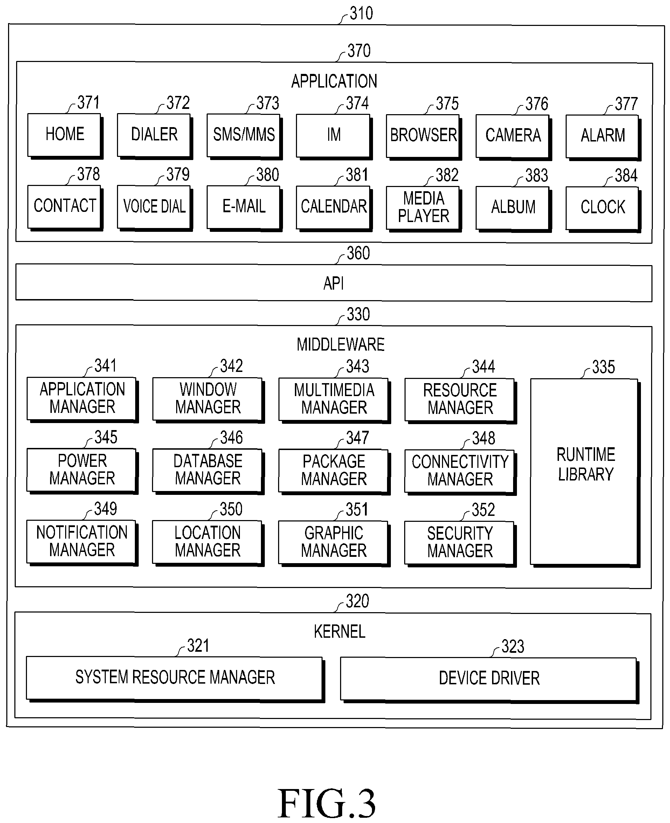

FIG. 3 is a block diagram illustrating a program module according to an embodiment of the present disclosure. According to an embodiment of the present disclosure, a program module 310 (e.g., the program 140) may include an operating system (OS) controlling resources related to the electronic device (e.g., the electronic device 101) and/or various applications (e.g., the application 147) driven on the operating system. The operating system may include, e.g., Android™, iOS™, Windows™, Symbian™, Tizen™, or Bada™. Referring to FIG. 3, the program module 310 may include a kernel 320 (e.g., the kernel 141), middleware 330 (e.g., the middleware 143), an API 360 (e.g., the API 145), and/or an application 370 (e.g., the application 147). At least a part of the program module 310 may be preloaded on the electronic device or may be downloaded from an external electronic device (e.g., the first external electronic device 102, the second external electronic device 104, or the server 106).

The kernel 320 may include, e.g., a system resource manager 321 or a device driver 323. The system resource manager 321 may perform control, allocation, or recovery of system resources. According to an embodiment of the present disclosure, the system resource manager 321 may include a process managing unit, a memory managing unit, or a file system managing unit. The device driver 323 may include, e.g., a display driver, a camera driver, a BT driver, a shared memory driver, a USB driver, a keypad driver, a Wi-Fi driver, an audio driver, or an inter-process communication (IPC) driver. The middleware 330 may provide various functions to the application 370 through the API 360 so that the application 370 may use limited system resources in the electronic device or provide functions jointly required by application 370. According to an embodiment of the present disclosure, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include a library module used by a compiler in order to add a new function through a programming language while the application 370 is being executed. The runtime library 335 may perform input/output management, memory management, or arithmetic function processing. The application manager 341 may manage the life cycle of the application 370. The window manager 342 may manage GUI resources used on the screen. The multimedia manager 343 may grasp formats necessary to play media files and use a codec appropriate for a format to perform encoding or decoding on media files. The resource manager 344 may manage the source code or memory space of the application 370. The power manager 345 may manage, e.g., the battery capability or power and provide power information necessary for the operation of the electronic device. According to an embodiment of the present disclosure, the power manager 345 may interwork with a basic input/output system (BIOS). The database manager 346 may generate, search, or vary a database to be used in the application 370. The package manager 347 may manage installation or update of an application that is distributed in the form of a package file.

The connectivity manager 348 may manage wireless connectivity. The notification manager 349 may provide an event, e.g., arrival message, appointment, or proximity alert, to the user. The location manager 350 may manage locational information on the electronic device. The graphic manager 351 may manage graphic effects to be offered to the user and their related user interface. The security manager 352 may provide system security or user authentication, for example. According to an embodiment of the present disclosure, the middleware 330 may include a telephony manager for managing the voice or video call function of the electronic device or a middleware module able to form a combination of the functions of the above-described elements. According to an embodiment of the present disclosure, the middleware 330 may provide a module specified according to the type of the operating system. The middleware 330 may dynamically omit some existing components or add new components. The API 360 may be a set of, e.g., API programming functions and may have different configurations depending on operating systems. For example, in the case of Android or iOS, one API set may be provided per platform, and in the case of Tizen™, two or more API sets may be offered per platform.

The application 370 may include an application that may provide, e.g., a home 371, a dialer 372, an short messaging system (SMS)/multimedia messaging system (MMS) 373, an instant message (IM) 374, a browser 375, a camera 376, an alarm 377, a contact 378, a voice dial 379, an e-mail 380, a calendar 381, a media player 382, an album 383, a clock 384, a health-care (e.g., measuring the degree of workout or blood sugar), or provision of environmental information (e.g., provision of air pressure, moisture, or temperature information). According to an embodiment of the present disclosure, the application 370 may include an information exchanging application supporting information exchange between the electronic device and an external electronic device. Examples of the information exchange application may include, but is not limited to, a notification relay application for transferring specific information to the external electronic device, or a device management application for managing the external electronic device. For example, the notification relay application may transfer notification information generated by another application of the electronic device to the external electronic device or receive notification information from the external electronic device and provide the received notification information to the user. For example, the device management application may install, delete, or update a function (e.g., turn-on/turn-off the external electronic device (or some elements) or adjusting the brightness (or resolution) of the display) of the external electronic device communicating with the electronic device or an application operating on the external electronic device. According to an embodiment of the present disclosure, the application 370 may include an application (e.g., a health-care application of a mobile medical device) designated according to an attribute of the external electronic device. According to an embodiment of the present disclosure, the application 370 may include an application received from the external electronic device. At least a portion of the program module 310 may be implemented (e.g., executed) in software, firmware, hardware (e.g., the processor 210), or a combination of at least two or more thereof and may include a module, program, routine, command set, or process for performing one or more functions.

As used herein, the term "module" includes a unit configured in hardware, software, or firmware and may interchangeably be used with other terms, e.g., "logic," "logic block," "part," or "circuit." The module may be a single integral part or a minimum unit or part of performing one or more functions. The module may be implemented mechanically or electronically and may include, e.g., an application-specific integrated circuit (ASIC) chip, field-programmable gate arrays (FPGAs), or programmable logic device, that has been known or to be developed in the future as performing some operations. According to an embodiment of the present disclosure, at least a part of the device (e.g., modules or their functions) or method (e.g., operations) may be implemented as instructions stored in a computer-readable storage medium (e.g., the memory 130), in the form of a program module. The instructions, when executed by a processor (e.g., the processor 120), may enable the processor to carry out a corresponding function. The computer-readable medium may include, e.g., a hard disk, a floppy disc, a magnetic medium (e.g., magnetic tape), an optical recording medium (e.g., CD-ROM, DVD, magnetic-optical medium (e.g., floptical disk), or an embedded memory. The instruction may include a code created by a compiler or a code executable by an interpreter. Modules or programming modules in accordance with various embodiments of the present disclosure may include at least one or more of the aforementioned components, omit some of them, or further include other additional components. Operations performed by modules, programming modules or other components in accordance with various embodiments of the present disclosure may be carried out sequentially, in parallel, repeatedly or heuristically, or at least some operations may be executed in a different order or omitted or other operations may be added.

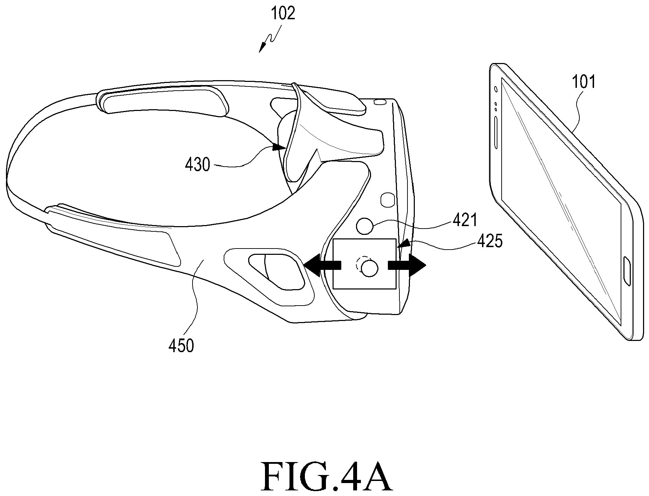

FIG. 4A is a perspective view illustrating an electronic device and an external electronic device according to an embodiment of the present disclosure.

Referring to FIG. 4A, the electronic device 101 may include a display. The electronic device 101 may store a VR application. The VR application may be an application that may provide a real-life-like display to the user. According to an embodiment of the present disclosure, the VR application may display an image for a left eye and an image for a right eye, respectively, corresponding the left and right eye of the user based on a stereo scheme.

The first external electronic device 102 may be an HMD. The HMD may be worn on the user's head to be fastened to the user's head despite the user's movement. The electronic device 101 may be coupled to the first external electronic device 102. The user may wear the first external electronic device 102 connected with the electronic device 101, viewing the image for the left eye and the image for the right eye displayed on the display of the electronic device 101.

According to an embodiment of the present disclosure, the first external electronic device 102 may include a housing 450 provided to be worn on the user's head, a sealing portion 430 provided at a region corresponding to the user's eyes, and at least one input button 421 provided at a region of the housing 450. The first external electronic device 102 may include an input pad 425 through which a swipe input may be received from the user.

The user may bring his/her eyes in tight contact with the sealing portion 430, allowing the user to observe an image by the VR application provided from the electronic device 101 without interference by external light.

The electronic device 101 may be coupled to the first external electronic device 102. The electronic device 101 may be wiredly/wirelessly connected with the first external electronic device 102. For example, the electronic device 101 may be connected with the first external electronic device 102 based on a USB, but this is merely an example. It will be appreciated by one of ordinary skill in the art that any other connections that enable data communication between the electronic device 101 and the first external electronic device 102 may be used without limitation. According to an embodiment of the present disclosure, the electronic device 101 may be coupled with the first external electronic device 102 simply in a physical way.

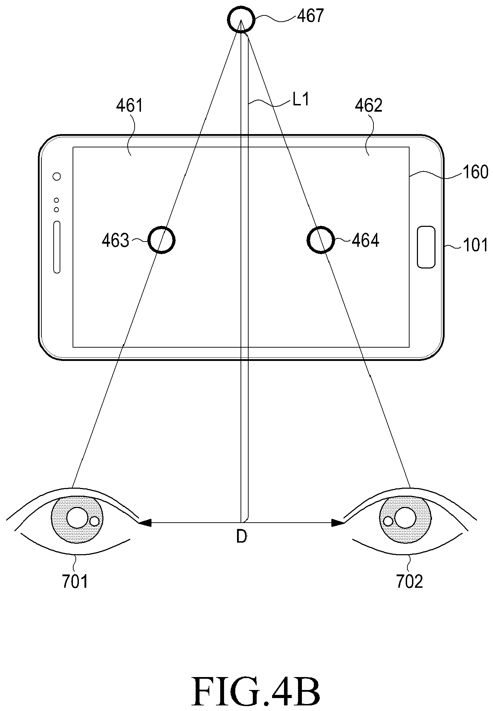

FIG. 4B is a view illustrating an example of a display by an electronic device according to an embodiment of the present disclosure.

Referring to FIG. 4B, the electronic device 101 may display an image 461 for a left eye and an image 462 for a right eye on the display 160. The image 461 for the left eye may include a sub object 463, and the image 462 for the right eye may include a sub object 464. Here, the sub object 463 may correspond to a left eye 701, and the sub object 464 may correspond to a right eye 702. Referring to FIG. 4B, the inter-pupillary distance (IPD), which is a distance between the left eye 701 and the right eye 702, may be D. The image 461 for the left eye and the image 462 for the right eye, respectively, may correspond to the user's left and right eye and may be images allowing the user to view images while feeling a depth. According to an embodiment of the present disclosure, the image 461 for the left eye and the image 462 for the right eye may be images for a VR service and may be images configured to provide a stereoscopic feeling for part of an overall image for a VR service. For example, the image 461 for the left eye and the image 462 for the right eye may be produced to differ to provide a feeling of depth. The user may feel a depth by observing a different image through each of his/her eyes.

The electronic device 101 may display the sub object 463 and the sub object 464 with them spaced apart from each other at a predetermined distance. The user may determine that an object image 467 is present at a point where a straight line passing through the left eye 701 and the sub object 463 crosses a straight line passing through the right eye 702 and the sub object 464. For example, the user may observe the presence of the object at a point that is positioned away from the user by L1.

According to an embodiment of the present disclosure, the electronic device 101 may display the sub object 463 and sub object 464 that are shaped as loops.

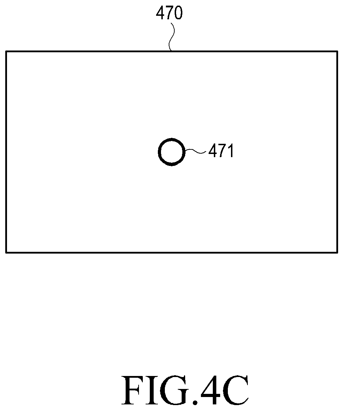

FIG. 4C is a concept view illustrating a screen viewed by a user according to an embodiment of the present disclosure.

Referring to FIG. 4C, the user may observe a screen 470 including a loop-shaped image 471. Although FIGS. 4A, 4B, and 4C illustrate that the electronic device 101 is separated from the first external electronic device 102 that is to be worn on the user, this is merely an example, the electronic device 101 and the first external electronic device 102 may be implemented in a single body.

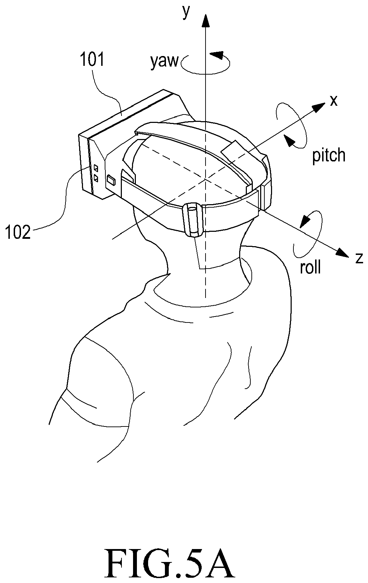

FIG. 5A is a perspective view illustrating an example in which a user wears an HMD according to an embodiment of the present disclosure.

Referring to FIG. 5A, the user may put the housing on his/her head. Further, the electronic device 101 may be coupled with the first external electronic device 102, and the user may view images displayed on the display of the electronic device 101.

The electronic device 101 may display an image for a left eye and an image for a right eye on left and right portions, respectively, of the display. The image for the left eye may be incident onto the user's left eye, and the image for the right eye may be incident onto the user's right eye. For example, the image for the left eye and the image for the right eye may be corresponding to each of the user's eyes respectively. The user may receive a VR service by observing the images incident onto his/her eyes. Alternatively, the image for the left eye and the image for the right eye may be displayed on their respective corresponding ones of two or more displays, rather than both of them being displayed on a single device. The electronic device may also display a single image, rather than the image for the left eye and the image for the right eye.

The VR application executed on the electronic device 101 may allow images for both eyes to be displayed on the display. Further, the VR application may vary and display the images for both eyes according to a motion (yaw, pitch, or roll) of the user or the first external electronic device 102.

The electronic device 101 may also vary the images for both eyes based on a command obtained by various input devices, e.g., a joystick, mouse, keyboard, steering wheel-shaped input device, or face tracking device. In this case, the direction that the user's view faces is not the direction in which he or she is actually viewing but may rather be a direction indicated by various input devices.

The first external electronic device 102 may receive a command through the at least one input button 421 and the input pad 425 from the user. For example, the electronic device 101 may obtain a command for refocusing or manipulation from the first external electronic device 102. According to an embodiment of the present disclosure, the user may directly input a command for refocusing or manipulation.

For example, when the user enters a swipe gesture in a first direction of the input pad 425, the electronic device 101 may perform a manipulation command corresponding thereto.

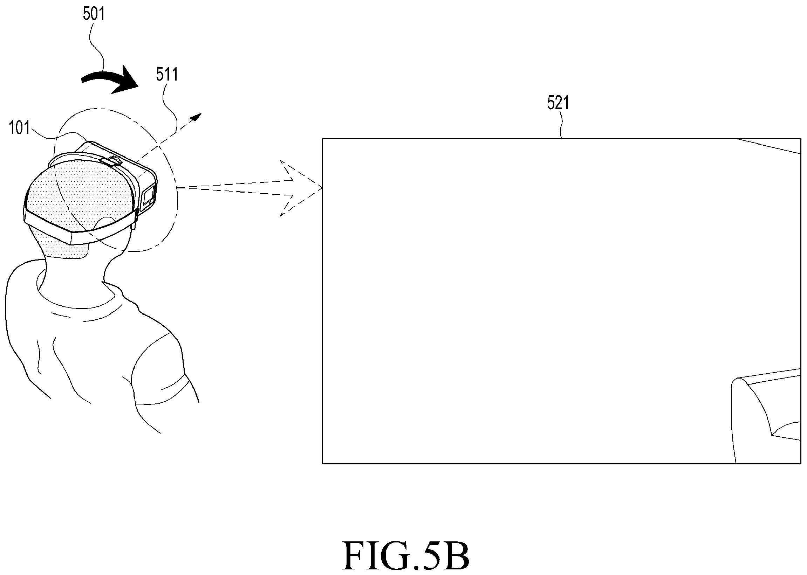

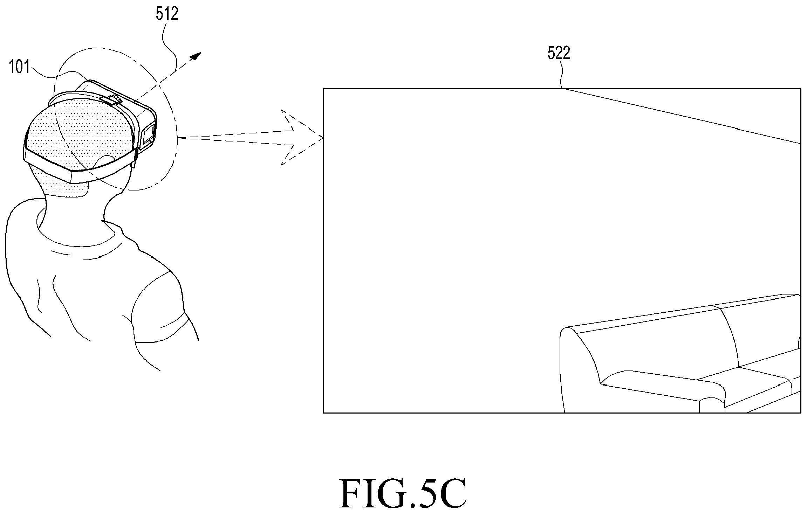

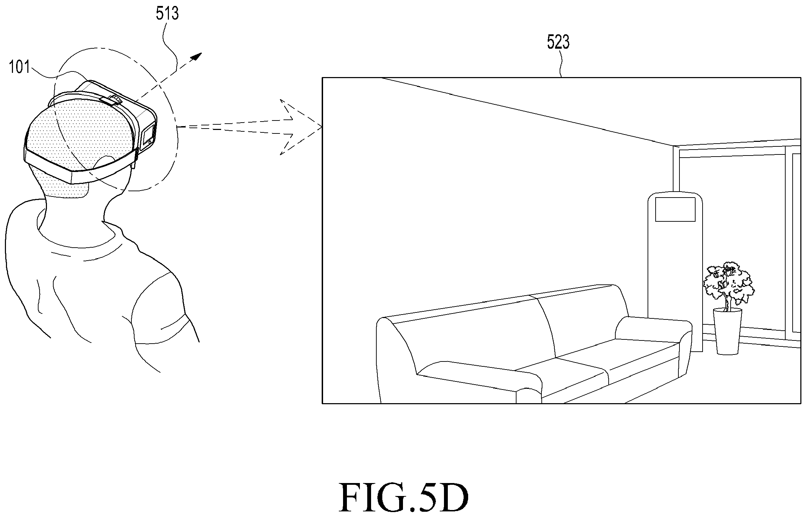

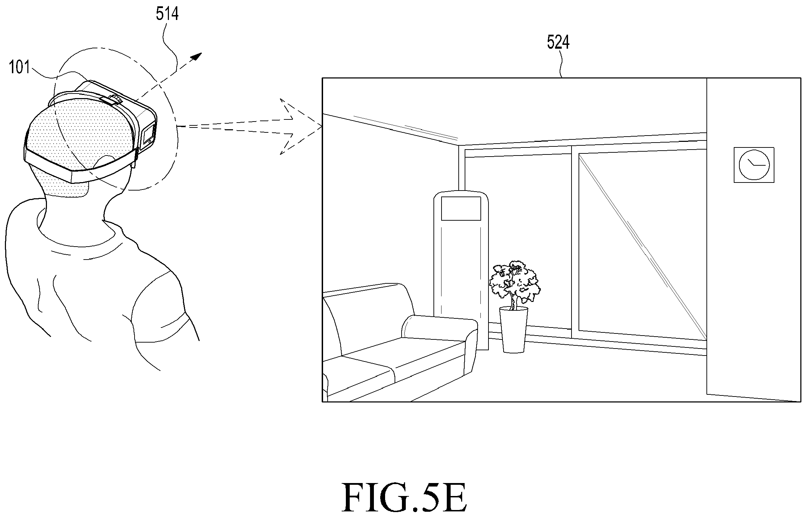

FIGS. 5B, 5C, 5D, and 5E are concept views illustrating examples of screen changes on an electronic device according to an embodiment of the present disclosure.

Referring to FIG. 5B, the user may view in a first direction 511 while wearing the electronic device 101. The electronic device 101 may display an image for left eye and an image for right eye for a first virtual screen 521 so that the user may view the first virtual screen 521. The first virtual screen 521 may be a screen corresponding to part of the entire screen set in a VR service. Further, the user may turn his/her head to make the head render a right turn 501, and the electronic device 101 may sense the right turn 501.

Referring to FIGS. 5C, 5D, and 5E, the user may turn his/her head from the first direction 511 to a second direction 512, a third direction 513, and a fourth direction 514. The electronic device 101 may sense the right turn 501 from the first direction 511 to the fourth direction 514. The electronic device 101 may vary and display the first virtual screen 521 corresponding to the right turn 501. For example, the electronic device 101 may display a second virtual screen 522 corresponding to the second direction 512, a third virtual screen 523 corresponding to the third direction 513, and a fourth virtual screen 524 corresponding to the fourth direction 514. Specifically, the electronic device 101 may display an image for a left eye and an image for a right eye for displaying each virtual screen. Each of the first virtual screen 521 to the fourth virtual screen 524 may be part of the entire screen constituting the VR service. Referring to FIGS. 5B, 5C, 5D, and 5E, the second virtual screen 522 may be a screen for the foreground which is positioned relatively to the right of the first virtual screen 521, the third virtual screen 523 may be a screen for the foreground which is positioned relatively to the right of the second virtual screen 522, and the fourth virtual screen 524 may be a screen for the foreground which is positioned relatively to the right of the third virtual screen 523. Accordingly, as the user turns his/her head to the right, the user may sequentially see the right-hand foregrounds.

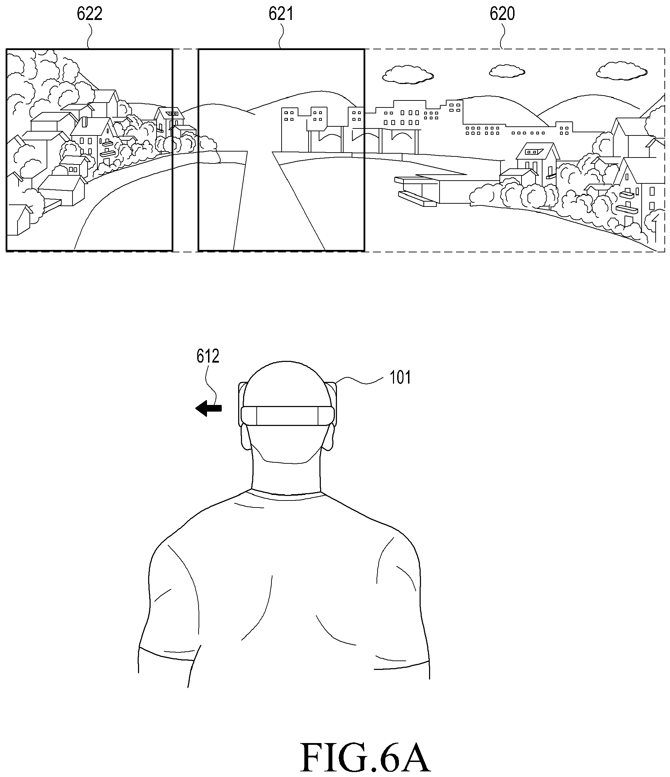

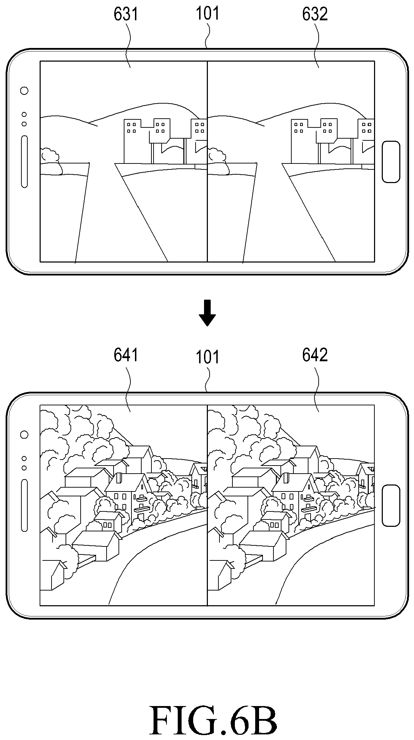

FIGS. 6A and 6B are concept views illustrating operations of an electronic device according to an embodiment of the present disclosure.

Referring to FIGS. 6A and 6B, the electronic device 101 may display a first portion 621 of an entire image 620, such as a panorama, i.e., a wide-angle image. For example, as shown in FIG. 6B, the electronic device 101 may display an image 631 for a left eye corresponding to the first portion 621 on at least part of a left half of the display, and an image 632 for a right eye corresponding to the first portion 621 on at least part of a right half of the display. Accordingly, the user may observe the first portion 621 while feeling a depth.

The user may turn his/her head to the left while viewing the first portion 621. Thus, the electronic device 101 may sense that the head has turned to render a left turn 612. Corresponding to the sensed left turn 612, the electronic device 101 may display an image 641 for a left eye and an image 642 for a right eye corresponding to a second portion 622, which is positioned relatively on the left-hand side of the entire image 620. Accordingly, the user may observe the portion corresponding to the line of sight varied as he turns his/her head, allowing the user to receive a real-life-like service.

Although FIG. 6A illustrates that the electronic device 101 displays a still image, this is merely an example. According to an embodiment of the present disclosure, the electronic device 101 may display a motion picture, a motion image, or a video. The electronic device 101 may display a portion corresponding to the user's line of sight on each of a plurality of frames constituting the video. In other words, the electronic device 101 may store or stream a video constituted of wide-angle images, and the video may include a plurality of wide-angle images in frames. The electronic device 101 may change frames targeted for display over time and may display an image for a left eye and an image for a right eye corresponding to part of the frame targeted for display depending on the user's view direction.

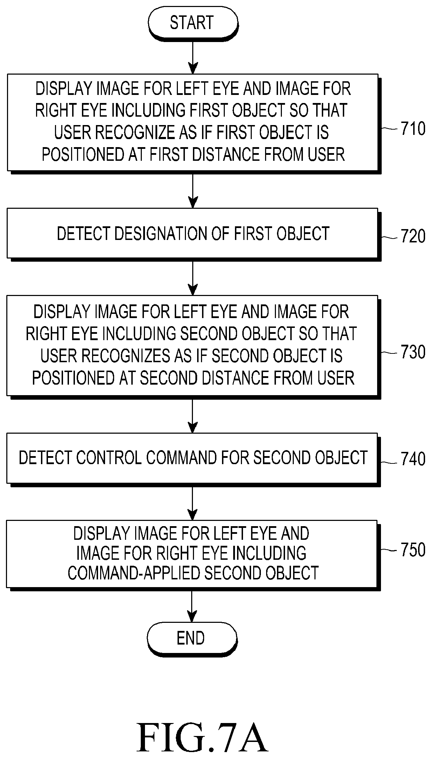

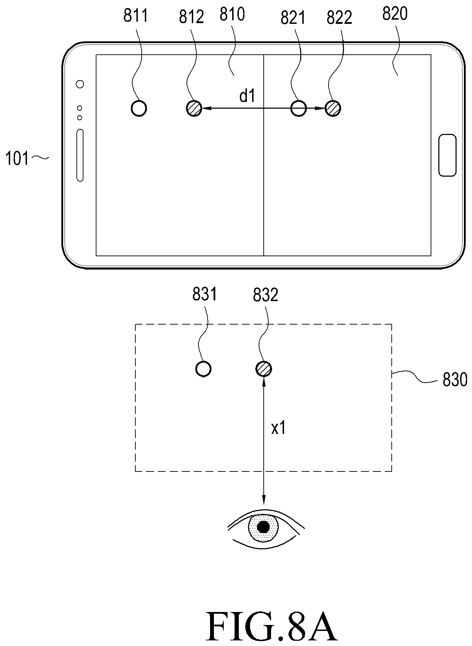

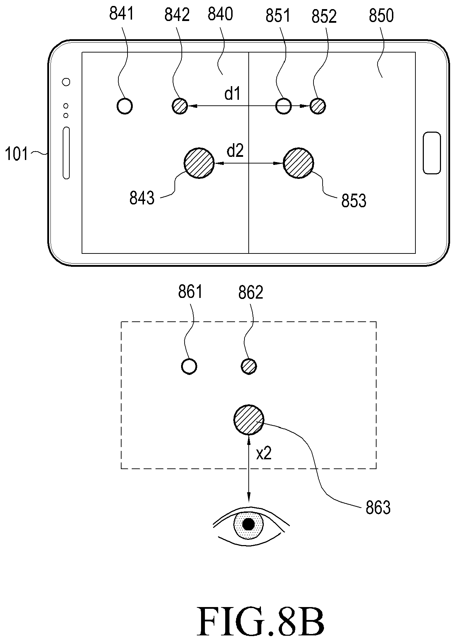

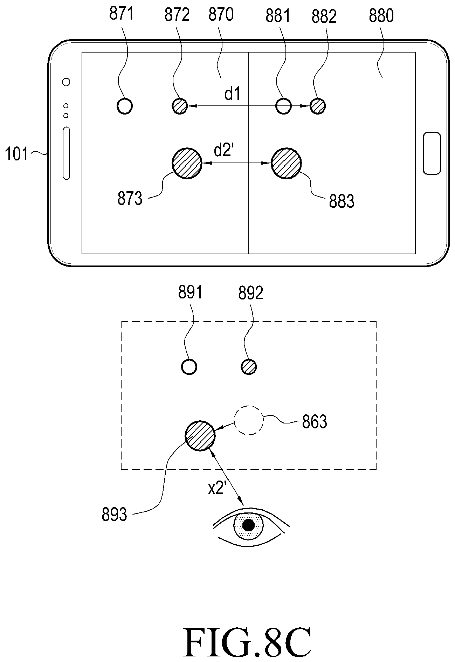

FIG. 7A is a flowchart illustrating a method for controlling an electronic device according to an embodiment of the present disclosure. The embodiment shown in FIG. 7A is described in further detail with reference to FIGS. 8A, 8B, and 8C. FIGS. 8A, 8B, and 8C are concept views illustrating operations of an electronic device according to an embodiment of the present disclosure.

Referring to FIGS. 7A, 8A, 8B, and 8C, the electronic device 101 may display an image for a left eye and an image for a right eye including a first object so that the user recognizes the first object as if the first object is positioned at a first distance from the user, in operation 710. Here, displaying the image for the left eye and image for the right eye including the first object may mean displaying an image including a sub object for the left eye corresponding to the first object and a sub object for the right eye corresponding to the first object. Further, the first object may mean an object that has undergone graphical processing to be recognized as if it is positioned at the first distance from the user. However, where a plurality of first objects are displayed, the distance between the user and each of the plurality of first objects may differ. Further, the phrase "electronic device 101 performs a particular operation" as used herein may mean that the processor 120 in the electronic device 101 may perform the particular operation. As used herein, the phrase "electronic device 101 performs a particular operation" may also mean that the processor 120 of the electronic device 101 controls other hardware to perform the particular operation. For example, referring to FIG. 8A, the electronic device 101 may display an image 810 for a left eye and an image 820 for a right eye. The image 810 for the left eye may include sub objects 811 and 812 for displaying the plurality of first objects, and the image 820 for the right eye may include sub objects 821 and 822 for displaying the plurality of first objects. In this case, the VR screen 830 recognized by the user may include the plurality of first objects 831 and 832. In other words, the sub object 811 and the sub object 821 may be sub objects for representing the first object 831 that the user recognizes, and the sub object 812 and the sub object 822 may be sub objects for representing the first object 832 that the user recognizes. Further, the electronic device 101 may determine that the interval between the sub object 812 and the sub object 822 is d1. The interval between the sub object 812 and the sub object 822 may be associated with the distance to the first object 832 observed by the user. The electronic device 101 may determine the interval d1 between the sub objects 812 and 822 corresponding to the first object 832 to allow the user to recognize the first object 832 as if the first object 832 is positioned at a distance of XI. Further, according to an embodiment of the present disclosure, the electronic device 101 may simply represent the distance as an overlap between the objects or relative distances of the objects, but it will readily be appreciated by one of ordinary skill in the art that allowing the user to recognize the distance is not limited to a particular way.

In operation 720, the electronic device 101 may detect a designation of a first object. For example, the electronic device 101 may detect a designation of a first object corresponding to the sub objects 812 and 822 in FIG. 8A. According to an embodiment of the present disclosure, the electronic device 101 may also display a cursor for designating the object. The user may observe that the cursor is positioned corresponding to the first object 832, and the user may then make a preset gesture or press a button provided in the electronic device 101 to designate the first object 832. However, no limitation is imposed on how to designate the object. The electronic device 101 may detect the user's gesture and detect the designation of the object corresponding to the detection. For example, the user may make such a gesture as if the user pulls his/her hand in while holding the object, and the electronic device 101 may recognize this as a designation of the object.

The electronic device 101 may display an image for a left eye and an image for a right eye including a second object so that the user recognizes the second object as if the second object is positioned at a second distance from the user, in operation 730. Here, the second object may be an object that has been graphically processed to be recognized closer in distance from the user than the first object. As set forth above, where a plurality of first objects are placed, they may be processed so that the distance between each of the first objects and the user differs in which case the second object may mean an object graphically processed so that the distance between the second object and the user is not more than a threshold. The second object may be set corresponding to a first object selected. Alternatively, the second object may be set independently from the existing first object that has been displayed.

For example, as shown in FIG. 8B, the electronic device 101 may display an image 840 for a left eye and an image 850 for a right eye, respectively, including sub objects 843 and 853 corresponding to a second object 863. The image 840 for the left eye may include sub objects 841 and 842 corresponding to the first objects 861 and 862 and the sub object 843 corresponding to the second object 863. The image 850 for the right eye may include sub objects 851 and 852 corresponding to the first objects 861 and 862 and a sub object 853 corresponding to the second object 863. According to an embodiment of the present disclosure, the first objects 861 and 862 may be the same as existing first objects 831 and 832 in which case the electronic device 101 may display the same sub objects 841, 842, 851, and 852 as the sub objects 811, 812, 821, and 822. Further, according to an embodiment of the present disclosure, the electronic device 101 may present such an effect as if the existing first object 832 is positioned relatively close to the user by not displaying the sub objects 842 and 852 corresponding to the first object 862. Here, the second object 863 may be an object associated with a first object 832 that has been designated. For example, the second object 863 may be an execution screen of an application corresponding to the first object 832 or an object previously produced corresponding to the first object 832, or the second object 863 may be the same object as the first object 832. Thus, the electronic device 101 may provide a function associated with the object 832 designated by the user. In particular, the electronic device 101 may display the sub objects 843 and 853 so that the second object 863 is recognized as if it is positioned at a distance X2 from the user by adjusting the size of the sub objects 843 and 853 or the interval d2 between the sub objects 843 and 853 corresponding to the second object 863. Further, although not shown, the electronic device 101 may display the second object 863 as if the second object 863 covers the first objects 831 and 832 being currently displayed, allowing the user to recognize the second object 863 as if the second object 863 is positioned relatively closer than the other first objects 831 and 832. As set forth above, the electronic device 101 may perform such a process that the distance between the user and the second object 863 set corresponding to the designated object differs from the distance between the user and the first objects 831 and 832 being displayed, allowing the user to recognize the invoked second object 863 distinctively from the other objects.

In operation 740, the electronic device 101 may detect a control command for the second object. In operation 750, the electronic device 101 may display an image for a left eye and an image for a right eye including a second object to which the control command has applied. For example, referring to FIG. 8C, the electronic device 101 may display an image 870 for a left eye and an image 880 for a right eye. The image 870 for the left eye may include sub objects 871 and 872 corresponding to the first objects 891 and 892 and a sub object 873 corresponding to a second object 893 to which the control command has applied. The image 880 for the right eye may include sub objects 881 and 882 corresponding to the first objects 891 and 892 and a sub object 883 corresponding to the second object 893 to which the control command has been applied. For example, the control command may be one to move the second object 893 to the left. The control command may be obtained by recognizing the user's gesture or by various input devices. The user's gesture may include various ones, e.g., holding or tilting the second object 893 in his/her hand, turning his/her hand, spreading his/her hands while holding it, putting his/her hands close to each other, or pushing or pulling his/her hand. The electronic device 101 may detect the user's gesture and identify a control command corresponding to the gesture.

The electronic device 101 may determine, e.g., the shape and color of the sub objects 873 and 883 corresponding to the second object 893 reflecting the obtained control command and render the sub objects 873 and 883 according to the determined result. The electronic device 101 may also display pre-stored sub objects 873 and 883 corresponding to the obtained control command. Accordingly, the user may recognize the invoked second object 893 as if the second object 893 has moved to the left. After displaying the sub objects corresponding to the second object, the electronic device 101 may use the control command in manipulating the second object, enabling manipulation independent from the other objects that have not been designated. Further, FIG. 8C illustrates that the second object 893 is positioned at a distance of X2' from the user, and the distance of X2' may be the same or different from the distance X2 of FIG. 8B. Thus, the interval d2' between the sub objects 873 and 883 corresponding to the second object 893 may also be the same or different from the interval d2 of FIG. 8B. Further, although FIG. 8C illustrates that the position of the second object is varied by the control command, this is merely an example. According to an embodiment of the present disclosure, the electronic device 101 may also change the size, shape, or color of the second object according to the control command and may vary the shape of the second object in such a manner as if the direction viewed in 3D is varied. The electronic device 101 may also display another object set corresponding to the second object according to a control command.

As described above, the electronic device 101 may present such a graphical effect as if the object corresponding to the designated object is positioned relatively close to the user. Accordingly, the user may recognize the object associated with the designated object distinctively from the other non-designated objects. Further, after the object corresponding to the designated object is displayed, the electronic device 101 may reflect that the control command is applied to the object corresponding to the designated object, and the user may thus be provided with an independent manipulation function of the invoked object.

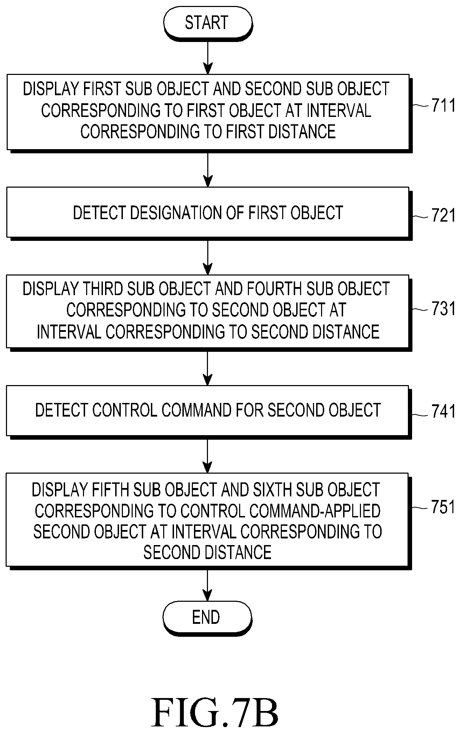

FIG. 7B is a flowchart illustrating a method for controlling an electronic device according to an embodiment of the present disclosure.

Referring to FIG. 7B, in operation 711, the electronic device 101 may display a first sub object and a second sub object corresponding to a first object at an interval corresponding to a first distance. In operation 721, the electronic device 101 may detect designation of a first object. In operation 731, the electronic device 101 may display a third sub object and a fourth sub object corresponding to a second object at an interval corresponding to a second distance. Here, the second object may be an object set corresponding to the first object. Further, the interval corresponding to the second distance may be smaller than the interval corresponding to the first distance. Thus, the user may recognize the second object as if the second object is positioned relatively closer than the first object.

In operation 741, the electronic device 101 may detect a control command for the second object. In operation 751, the electronic device 101 may display a fifth sub object and a sixth sub object corresponding to the second object to which the control command has applied. Further, alternatively, the electronic device 101 may display the fifth sub object and the sixth sub object corresponding to the second object to which the control command has applied, at an interval corresponding to a third distance different from the second distance.

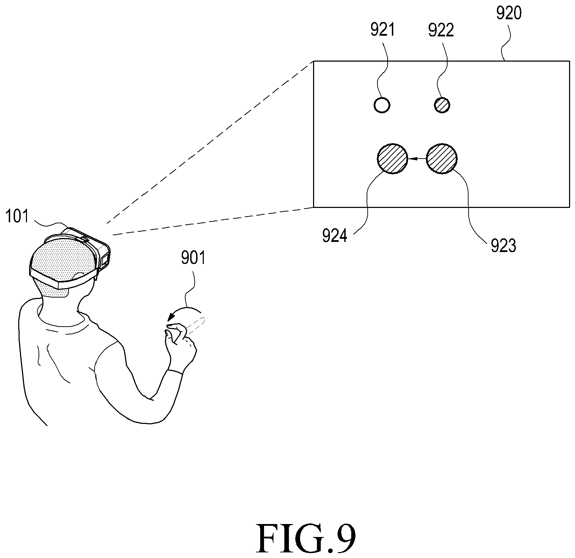

FIG. 9 is a concept view illustrating operations of an electronic device according to an embodiment of the present disclosure.

Referring to FIG. 9, the user may mount the electronic device 101 onto an HMD-type electronic device and wear it. Thus, the user may receive a real-life-like VR service by viewing the image for the left eye and the image for the right eye displayed on the electronic device 101. For example, the user may view a VR screen 920 including first objects 921 and 922. Further, the VR screen 920 may include a second object 923 set corresponding to one selected among the first objects 921 and 922. The second object 923 may be positioned closer to the user than the first objects 921 and 922. The electronic device 101 may display an image for a left eye and an image for a right eye including the sub objects corresponding to the first objects 921 and 922 and the second object 923 as described above in connection with FIGS. 8A, 8B, and 8C.

Further, the user may make a gesture 901, e.g., bending his/her finger. According to an embodiment of the present disclosure, the electronic device 101 may detect the gesture 901 and recognize the detected gesture 901 as a control command. The electronic device 101 may detect the gesture 901 using data from, e.g., a sensor attached to part of the user's body or may also detect the gesture 901 by analyzing an image captured for the outside view. Specifically, the sensor may include biometric information sensor capable of sensing, e.g., the user's muscular tension, and the electronic device 101 may detect and analyze the gesture 901 using the sensed biometric information. The sensor may also be implemented as a gyro sensor, acceleration sensor, or other sensors capable of sensing motions. The electronic device 101 may detect and analyze the gesture 901 based on the motion information sensed. The sensor may include a camera sensor. The sensor may capture the user into a plurality of images. The electronic device 101 may identify a motion of, at least, part of the user's body in the captured images, and the electronic device 101 may detect and analyze its corresponding gesture 901. Further, the sensor may also be implemented as a stereo camera or depth camera capable of capturing depth information in which case the electronic device 101 may also obtain 3D gesture information. Further, the above-described method for detecting and analyzing a gesture is a mere example. According to an embodiment of the present disclosure, the electronic device 101 may detect and analyze the gesture 901 using various legacy gesture detection and analysis methods without being limited to a particular one.

The electronic device 101 may vary and display the image for the left eye and the image for the right eye so that the second object 924 reflecting the result of recognition, i.e., the moved sub object, is included in the VR screen 920. As described above, the electronic device 101 may provide a function that allows the user to manipulate the invoked second object 923. In particular, the electronic device 101 may set the distance between the user and the second object 923, which is a target for manipulation, to be different from the distance between the user and each of the other non-designated objects, allowing the user to more distinctively recognize the target for manipulation.

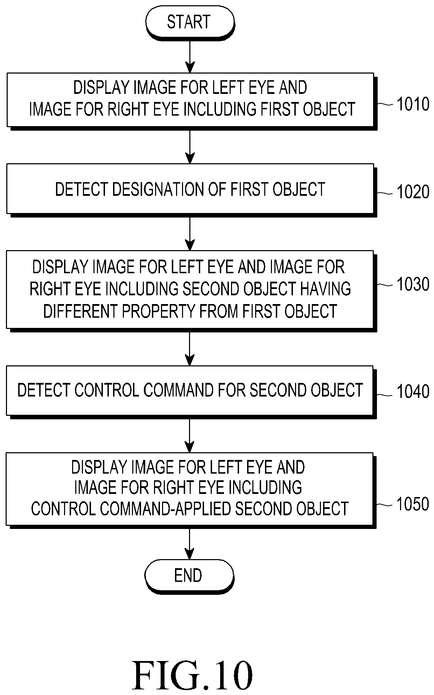

FIG. 10 is a flowchart illustrating a method for controlling an electronic device according to an embodiment of the present disclosure.

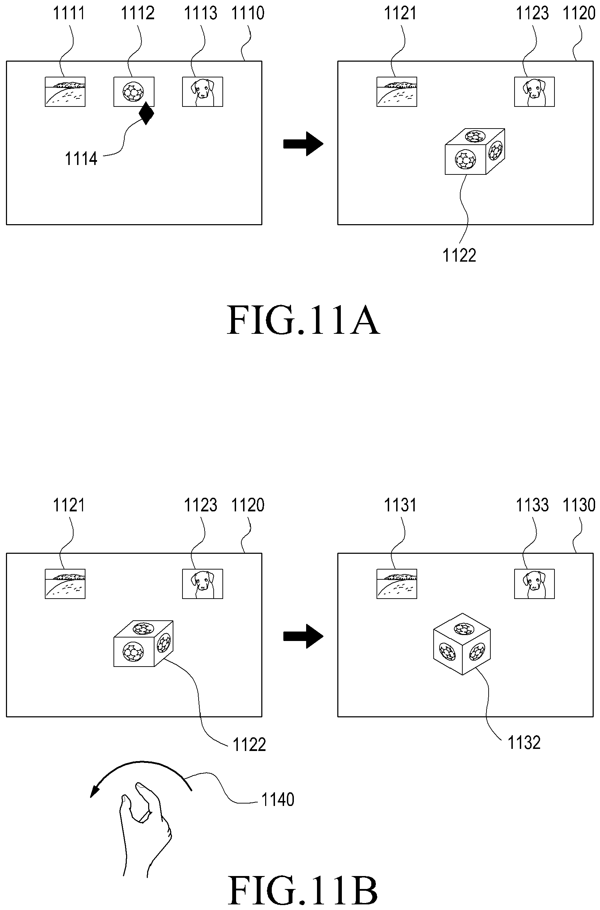

The embodiment related to FIG. 10 is described in greater detail with reference to FIGS. 11A and 11B. FIGS. 11A and 11B are concept views illustrating operations of an electronic device according to embodiments of the present disclosure.

Referring to FIGS. 10, 11A, and 11B, in operation 1010, the electronic device 101 may display an image for a left eye and an image for a right eye including a first object. Specifically, the electronic device 101 may display an image for a left eye and an image for a right eye respectively including a sub object for the left eye and a sub object for the right eye corresponding to the first object. In operation 1020, the electronic device 101 may detect designation of a first object. For example, the electronic device 101 may display a VR screen 1110 so that the user may view the VR screen 1110. As used herein, the phrase "view a VR screen" may mean that the electronic device 101 displays an image for a left eye and an image for a right eye corresponding to the VR screen. The VR screen 1110 may include a plurality of objects 1111, 1112, and 1113 and a cursor 1114. The cursor 1114 may be repositioned depending on a user input. The electronic device 101 may detect a user input associated with designation of the cursor 1114, and the electronic device 101 may determine that the object 1112 disposed where the cursor 1114 is positioned is the object that the user chooses.

In operation 1030, the electronic device 101 may display an image for a left eye and an image for a right eye including a second object having a different property from that of the first object. For example, the electronic device 101 may display the VR screen 1110 including the object 1112 having a two-dimensional (2D) property. Further, in response to detecting a designation of the object 1112, the electronic device 101 may display a VR screen 1120 including an object 1122 having a 3D property. The object 1122 having the 3D property may be reoriented in 3D according to a control command entered by the user. Further, the VR screen 1120 may include non-designated objects 1121 and 1123. The object 1122 may be in a form mapped to a 3D panel or may be formed of a 3D object.

In operation 1040, the electronic device 101 may detect a control command for the second object. In operation 1050, the electronic device 101 may display an image for a left eye and an image for a right eye including a second object to which the control command has applied. For example, referring to FIG. 11b, the electronic device 101 may detect a gesture 1140 of turning the user's hand. The electronic device 101 may change an orientation of the object 1122 having a 3D property corresponding to the detected control command and display a VR screen 1130 including a control command-reflected second object 1132. Further, the VR screen 1130 may include non-designated objects 1131 and 1133. As set forth above, the electronic device 101 may reflect that the detected control command is applied to the object 1122 set corresponding to the designated object 1112, and the user may thus manipulate the object in an independent work space.

Further, although it has been described with reference to FIGS. 11A and 11B that the second object and the first object have different properties since the second object is an object produced based on the 3D property and the first object is an object produced based on the 2D property, it is merely an example. According to an embodiment of the present disclosure, the second object may have a different display property than the first object. For example, the second object may differ from the first object in light of various display properties, e.g., size, color, or transparency. The second object may be provided from the application that provides the first object. For example, the application may provide the non-designated objects 1121 and 1123 and object 1122 and may be produced to provide the object 1122 having the 3D property corresponding to the control command-reflected second object 1132. The application may also be produced to provide the first object alone. In this case, the electronic device 101 may vary the property of the designated first object corresponding to the designation of the first object.

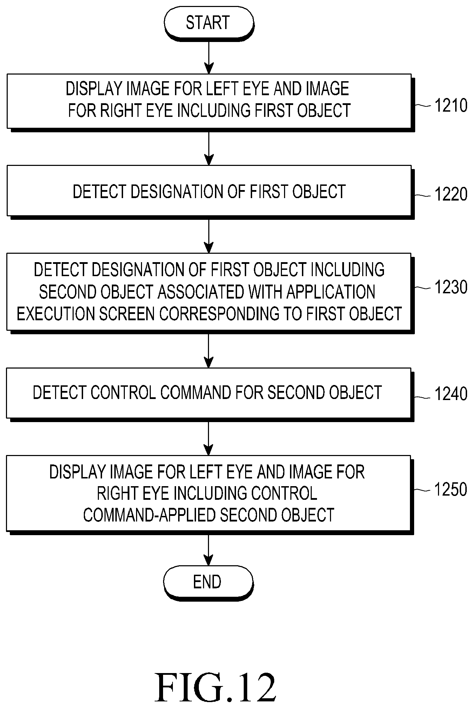

FIG. 12 is a flowchart illustrating a method for controlling an electronic device according to an embodiment of the present disclosure.

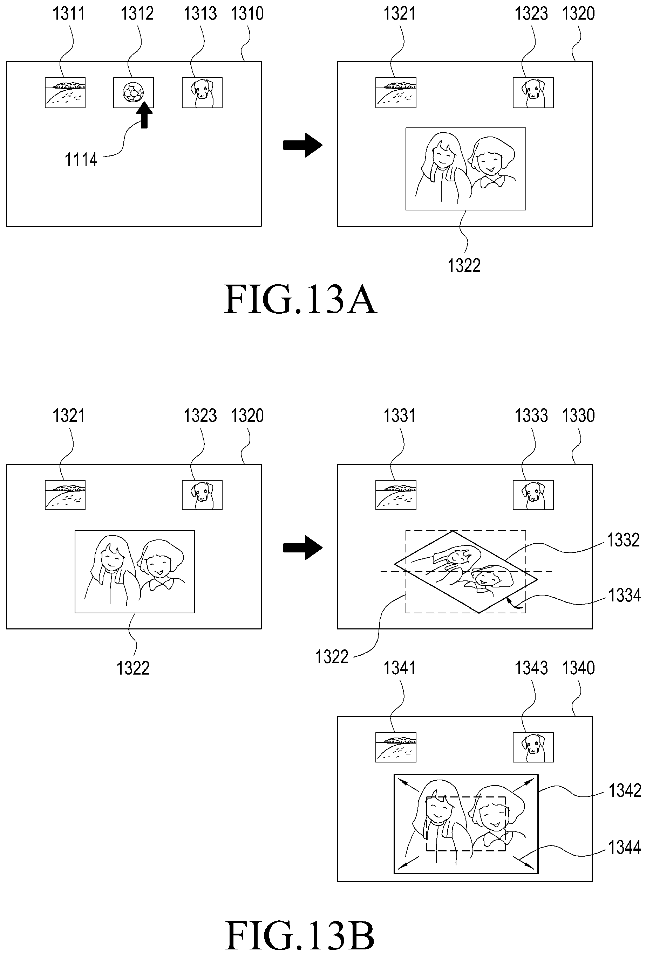

The embodiment related to FIG. 12 is described in greater detail with reference to FIGS. 13A and 13B. FIGS. 13A and 13B are concept views illustrating operations of an electronic device according to embodiments of the present disclosure.

Referring to FIGS. 12, 13A, and 13B, in operation 1210, the electronic device 101 may display an image for a left eye and an image for a right eye including a first object. In operation 1220, the electronic device 101 may detect designation of a first object. In operation 1230, the electronic device 101 may display an image for a left eye and an image for a right eye including a second object associated with an application execution screen corresponding to the first object. For example, referring to FIG. 13A, the electronic device 101 may display a VR screen 1310 including the first objects 1311, 1312, and 1313. The electronic device 101 may also detect a designation of the first object 1312. The first object 1312 may be an icon that represents a video file. The electronic device 101 may display a VR screen 1320 including a second object 1322 which is the application execution screen corresponding to the designated first object 1312. The VR screen 1320 may also include non-designated objects 1321 and 1323.

In operation 1240, the electronic device 101 may detect a control command for the second object. In operation 1250, the electronic device 101 may display an image for a left eye and an image for a right eye including a second object to which the control command has applied. For example, referring to FIG. 13B, the electronic device 101 may display a VR screen 1330 including a control command-reflected second object 1332. According to an embodiment of the present disclosure, the control command may be a command for turning the second object 1322 in a 3D space. The electronic device 101 may display the VR screen 1330 including the control command-reflected second object 1332 that has been turned, as indicated at 1334, corresponding to a control command. The control command may be a command for enlarging the second object 1322. The electronic device 101 may display a VR screen 1340 including a second object 1342 that has been enlarged, as indicated at 1344, corresponding to a control command. The VR screen 1330 may also include non-designated first objects 1331 and 1333, and the VR screen 1340 may also include non-designated first objects 1341 and 1343.

Further, although FIGS. 13A and 13B illustrate that the second object 1322 is an object played as video by the electronic device 101, this is merely an example. The second object may be an execution screen of one of various applications corresponding to the designated first object or may be an application execution screen produced as a preview.

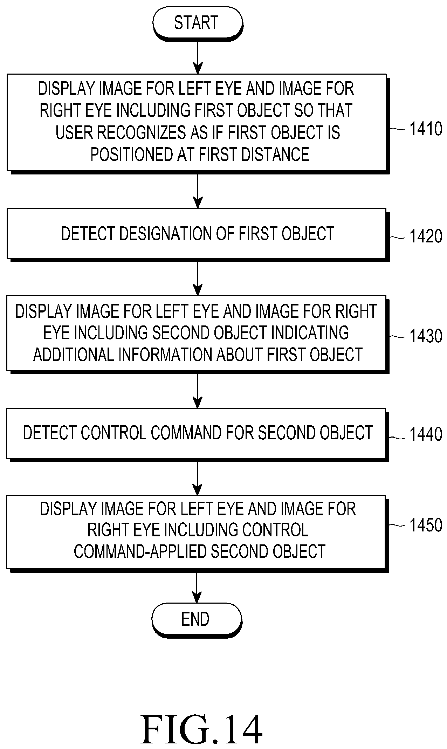

FIG. 14 is a flowchart illustrating a method for controlling an electronic device according to an embodiment of the present disclosure.

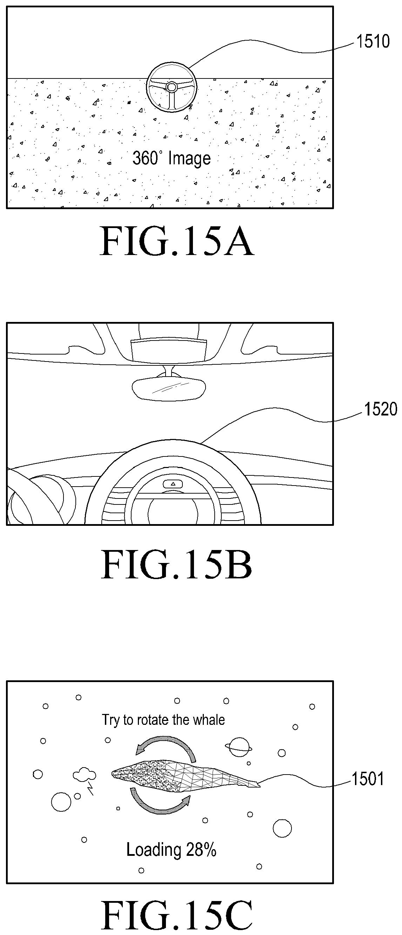

The embodiment related to FIG. 14 is described in greater detail with reference to FIGS. 15A, 15B, and 15C. FIGS. 15A, 15B, and 15C are concept views illustrating operations of an electronic device according to an embodiment of the present disclosure.

Referring to FIGS. 14, 15A, 15B, and 15C, the electronic device 101 may display an image for a left eye and an image for a right eye including the first object so that the user recognizes the first object as if the first object is positioned at a first distance from the user, in operation 1410. In operation 1420, the electronic device 101 may detect a designation of a first object. In operation 1430, the electronic device 101 may display an image for a left eye and an image for a right eye including a second object that represents additional information for the first object. For example, referring to FIG. 15A, the electronic device 101 may display a VR screen including a first object 1510. The electronic device 101 may also display the first object 1510 set for, e.g., advertisement, while displaying the preset VR screen. In response to detecting the designation of the first object 1510, the electronic device 101 may display a second object 1520. In the instant embodiment, the electronic device 101 may display the second object 1520 on the whole or part of the screen.

In operation 1440, the electronic device 101 may detect a control command for the second object. In operation 1450, the electronic device 101 may display an image for a left eye and an image for a right eye including a second object to which the control command has applied. For example, as the second object 1520 is manipulated, the electronic device 101 may display the VR screen that is varied corresponding to the manipulation. FIG. 15C illustrates a second object 1501 according to an embodiment of the present disclosure. For example, the electronic device 101 may detect a designation of a first object of an application execution icon and may display a loading screen of a first application corresponding to the detection. The electronic device 101 may display the second object 1501 corresponding to a mini game on the loading screen. The mini game may use relatively fewer resources, thus less obstructing of the application loading is experienced. The electronic device 101 may detect a control command for the second object 1501 and display a second object reflecting the control command.

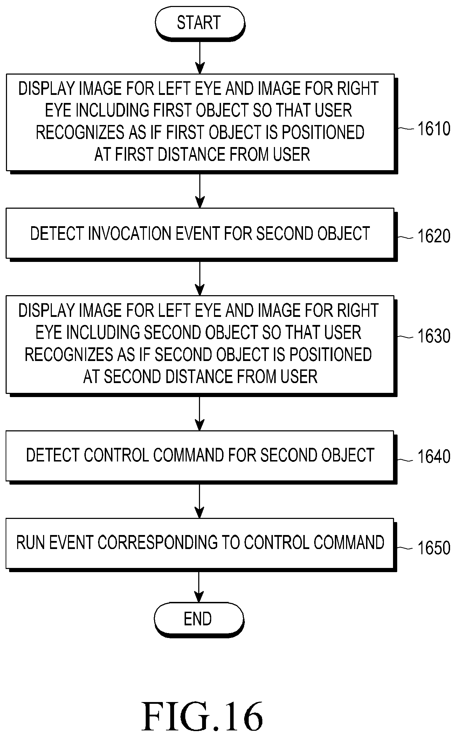

FIG. 16 is a flowchart illustrating a method for controlling an electronic device according to an embodiment of the present disclosure.

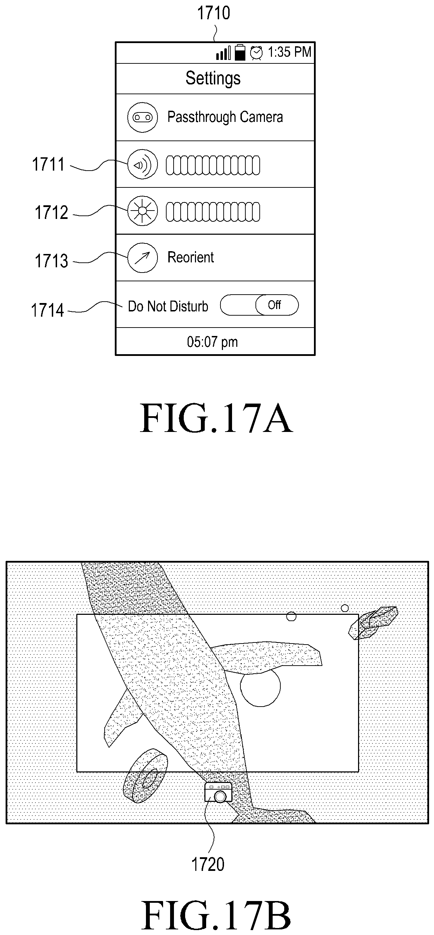

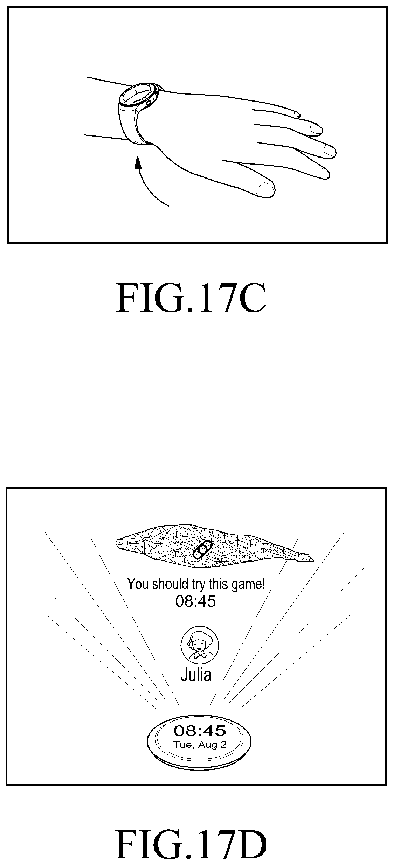

Referring to FIG. 16, the electronic device 101 may display an image for a left eye and an image for a right eye including the first object so that the user recognizes the first object as if the first object is positioned at a first distance from the user, in operation 1610. In operation 1620, the electronic device 101 may detect a second object invocation event. According to an embodiment of the present disclosure, the electronic device 101 may previously set different types of second object invocation events as well as designate the first object. In this case, the second object may be an object irrelevant to the object that has previously be included and displayed in the VR screen. Various types of second objects are described below in greater detail with reference to FIGS. 17A, 17B, 17C, and 17D.

The electronic device 101 may display an image for a left eye and an image for a right eye including the second object so that the user recognizes as if the second object is positioned at a second distance from the user, in operation 1630. In operation 1640, the electronic device 101 may detect a control command for the second object. In operation 1650, the electronic device 101 may run an event corresponding to the control command. As set forth above, the electronic device 101 may provide a function independent from the existing object that is used to be displayed, as well as a function corresponding to the existing object being displayed. Now described is a provision of various independent functions with reference to FIGS. 17A, 17B, 17C, and 17D.

FIGS. 17A, 17B, 17C, and 17D are concept views illustrating operations of an electronic device according to an embodiment of the present disclosure.

Referring to FIGS. 17A, 17B, 17C, and 17D, the electronic device 101 may detect the user's gesture and may identify that the gesture is a gesture for requesting to provide a tool box menu. In this case, the electronic device 101 may display a tool box menu 1710 as shown in FIG. 17A on part of the VR screen. The electronic device 101 may also use a user command entered after displaying the tool box menu 1710 in manipulating the tool box. The tool box menu 1710 may include, e.g., a volume control key 1711, a brightness control key 1712, a screen control key 1713, and a lock screen key 1714. Thus, the user may easily invoke and manipulate the tool box menu 1710.

For example, the electronic device 101 may detect the user's gesture and may identify that the gesture is a gesture for requesting a camera application. For example, the electronic device 101 may display a VR screen as shown in FIG. 17B. In response to identifying the gesture of requesting a camera application, the electronic device 101 may display an object 1720 for capturing while displaying a captured portion on the existing VR screen. In response to detecting a control command for capturing, the electronic device 101 may store an image corresponding to the captured portion.

For example, the electronic device 101 may detect the user's gesture and identify that the gesture is a gesture for requesting a clock widget. For example, referring to FIGS. 17C and 17D, the user may make the gesture of raising his/her hand, and the electronic device 101 may display, on the VR screen, an object including the time and notification, as shown in FIG. 17D, corresponding to the gesture.

As set forth above, the electronic device 101 may provide an object independent from the existing object being displayed, contributing to user convenience.

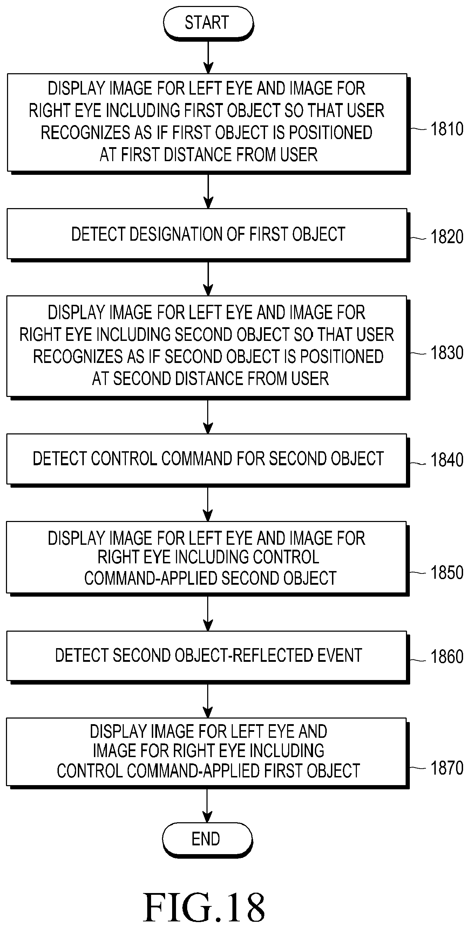

FIG. 18 is a flowchart illustrating a method for controlling an electronic device according to an embodiment of the present disclosure.

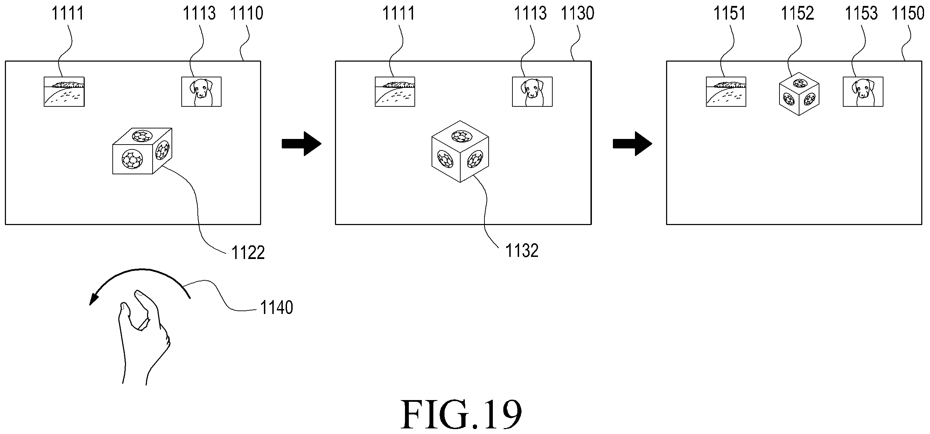

The embodiment shown in FIG. 18 is described in greater detail with reference to FIG. 19. FIG. 19 is a concept view illustrating an operation of an electronic device according to an embodiment of the present disclosure.

Referring to FIGS. 18 and 19, the electronic device 101 may display an image for a left eye and an image for a right eye including the first object so that the user recognizes the first object as if the first object is positioned at a first distance from the user, in operation 1810. In operation 1820, the electronic device 101 may detect a designation of a first object. The electronic device 101 may display an image for a left eye and an image for a right eye including a second object so that the user recognizes the second object as if the second object is positioned at a second distance from the user, in operation 1830. In operation 1840, the electronic device 101 may detect a control command for the second object. In operation 1850, the electronic device 101 may display an image for a left eye and an image for a right eye including a second object to which the control command has applied.

Referring to FIG. 19, the electronic device 101 may detect the gesture 1140 of turning the user's hand. The electronic device 101 may change an orientation of the object 1122 having a 3D property corresponding to the detected control command and display the VR screen 1130 including the control command-reflected second object 1132. Further, the VR screen 1130 may include non-designated objects 1131 and 1133.

In operation 1860, the electronic device 101 may detect a second object reflection event. For example, the electronic device 101 may detect the user's gesture, e.g., extending his hand forward, and may recognize the same as the second object reflection event. In operation 1870, the electronic device 101 may display an image for a left eye and an image for a right eye including a first object to which the control command has applied. Referring to FIG. 19, the electronic device 101 may display a VR screen 1150 including a second object 1152 having substantially the same shape as the control command-reflected second object 1132. The VR screen 1150 may also include the existing objects 1151 and 1153 being displayed. As described above, the electronic device 101 may apply changes to the invoked second object in the existing VR screen being displayed.

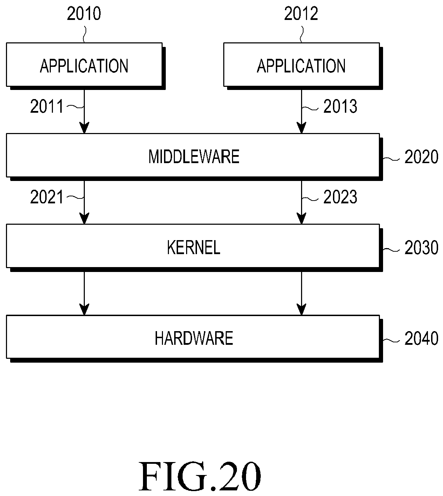

FIG. 20 is a concept view illustrating a system hierarchy according to an embodiment of the present disclosure.

Referring to FIG. 20, a middleware 2020 may function as a relay for communicating with the kernel 141, a first application 2010, and a second application 2012 to send or receive data. It is assumed in the embodiment of FIG. 20 that the first application 2010 may provide both a first object and a second object set corresponding to the first object. The second application 2012 is assumed to provide only the first object.

Where the first application 2010 is running, the electronic device 101 may display an execution screen of the first application. The execution screen of the first application may include a first object. Further, the electronic device 101 may detect a designation of the first object and send a request for a second object corresponding to the first object to the first application 2010 corresponding to the detection. The first application 2010 may provide VR screen data 2011 including the second object, and the middleware 2020 may provide VR screen data 2021 to a kernel 2030 and hardware 2040, i.e., the display. Thus, the electronic device 101 may display a VR screen including the VR screen data 2011 of the second object. Further, where the second application 2012 is running, the electronic device 101 may display an execution screen of the second application. The execution screen of the second application may include a first object. Further, the electronic device 101 may detect a designation of the first object and send a request for data of the first object corresponding to the detection. The second application 2012 may provide data 2013 for the first object, and the middleware 2020 may generate a second object using the data 2013 for the first object. For example, the middleware 2020 may vary the property of the data 2013 for the first object and generate the second object. The middleware 2020 may also generate the second object, e.g., by turning the data 2013 for the first object in the 3D space. The middleware 2020 may provide VR screen data 2023 including the second object generated by surface-flingering the generated second object onto the VR screen received from the second application 2012 to the kernel 2030 and the hardware 2040. Accordingly, the electronic device 101 may provide such a function as to display the second object in response to designating the first object also for the second application that does not provide the second object.

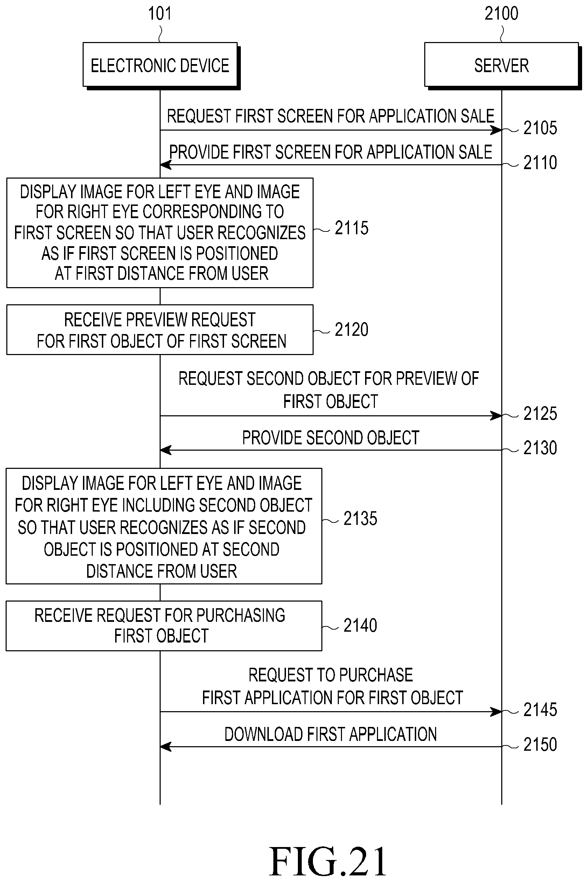

FIG. 21 is a flowchart illustrating a method for controlling an electronic device and a server according to an embodiment of the present disclosure.

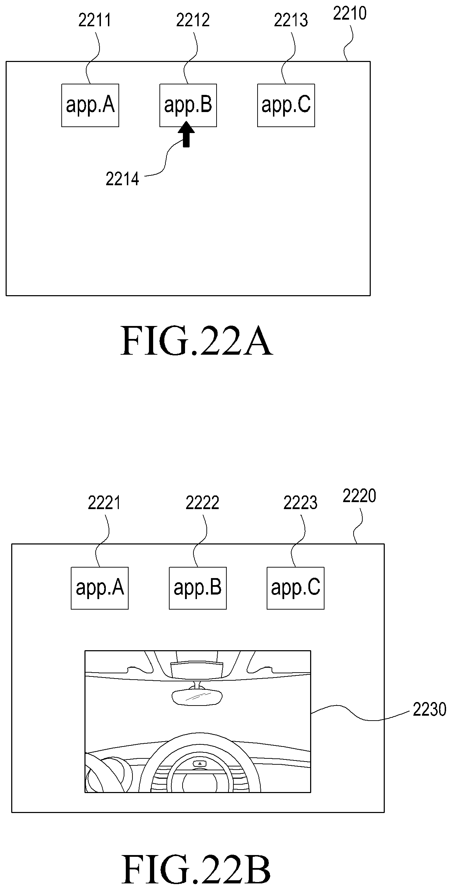

The embodiment related to FIG. 21 is described in greater detail with reference to FIGS. 22A and 22B. FIGS. 22A and 22B are concept views illustrating operations of an electronic device according to an embodiment of the present disclosure.

Referring to FIGS. 21, 22A, and 22B, in operation 2105, the electronic device 101 may request a first screen for application sale. For example, the electronic device 101 may run an application sale server access application and may accordingly request a first screen for application sale. In operation 2110, a server 2100 may provide a first screen for an application sale. The electronic device 101 may display an image for a left eye and an image for a right eye corresponding to the first screen so that the user recognizes the first screen as if the first screen is positioned at a first distance from the user, in operation 2115. According to an embodiment of the present disclosure, the server 2100 may send the image for the left eye and the image for the right eye corresponding to the first screen. The electronic device 101 may also generate and display an image for a left eye and image for a right eye based on the received first screen. Thus, the electronic device 101 may display a VR screen 2210 including a plurality of first objects 2211, 2212, and 2213 as shown in FIG. 22A.

In operation 2120, the electronic device 101 may receive a request for preview of a first object of the first screen. In operation 2125, the electronic device 101 may request a second object for preview of the first object. For example, the electronic device 101 may detect a designation of a first object, such as a designation of a cursor 2214, and may send a request for a second object set corresponding to the first object to the server 2100 corresponding to the detection.

In operation 2130, the server 2100 may provide a second object. The electronic device 101 may display an image for a left eye and an image for a right eye including a second object so that the user recognizes the second object as if the second object is positioned at a second distance from the user, in operation 2135. For example, the electronic device 101 may display a VR screen 2220 including a second object 2230 as shown in FIG. 22B. The VR screen 2220 may include first objects 2221, 2222, and 2223 or may display the second object 2230 on the entire screen. The second object may be an application execution screen or an object previously produced to introduce an application. Further, in response to receiving an additional control command, the electronic device 101 may display a second object to which the control command has applied, allowing the user to experience the application in advance.

In operation 2140, the electronic device 101 may receive a request for purchasing a first object from the user. In operation 2145, the electronic device 101 may request to purchase a first application for the first object. In operation 2150, the electronic device 101 may download the first application.

As set forth above, the server corresponding to an application market may not merely provide a description of the application but may also provide an application execution screen or introduction screen in a VR screen.

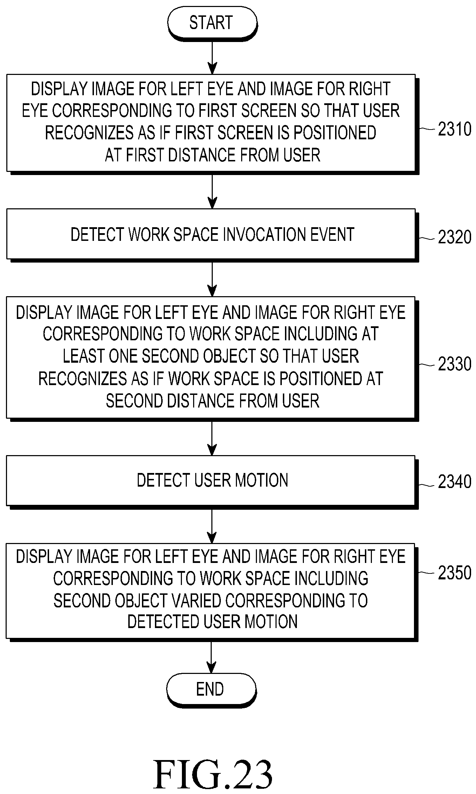

FIG. 23 is a flowchart illustrating a method for controlling an electronic device according to an embodiment of the present disclosure.

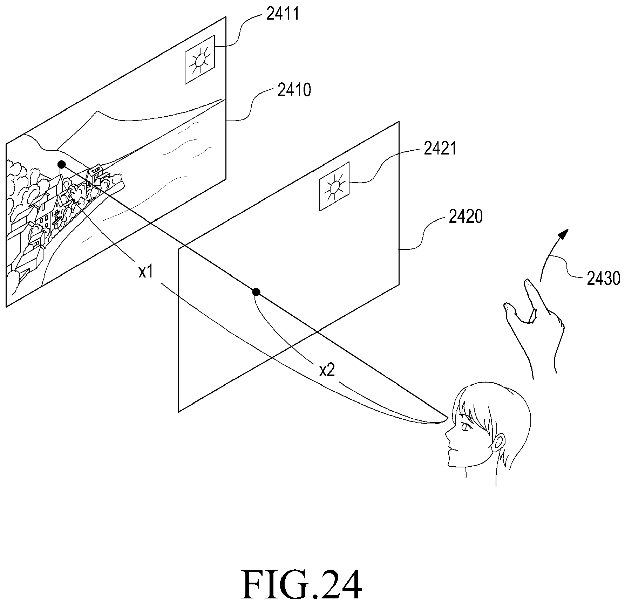

The embodiment related to FIG. 23 is described in greater detail with reference to FIG. 24. FIG. 24 is a concept view illustrating a work space according to an embodiment of the present disclosure.

Referring to FIGS. 23 and 24, the electronic device 101 may display an image for a left eye and an image for a right eye corresponding to the first screen so that the user recognizes the first screen as if the first screen is positioned at a first distance from the user, in operation 2310. For example, the electronic device 101 may process a first screen 2410 so that the user recognizes the first screen 2410 as if the first screen 2410 is positioned at a first distance X1 as shown in FIG. 24. Specifically, the electronic device 101 may determine, e.g., the size of an object 2411 included in the first screen 2410 and the interval between a sub object for the left eye and a sub object for the right eye, respectively, included in an image for the left eye and an image for the right eye corresponding to the first screen 2410, corresponding to the first distance X1.

In operation 2320, the electronic device 101 may detect a work space invocation event. The electronic device 101 may display an image for a left eye and an image for a right eye corresponding to a work space including at least one second object so that the user recognizes the work space as if the work space is positioned at a second distance from the user, in operation 2330. For example, the electronic device 101 may display a work space 2420 including a second object 2421 as if the work space 2420 is positioned at a second distance X2 from the user, as shown in FIG. 24.

In operation 2340, the electronic device 101 may detect a user motion 2430. In operation 2350, the electronic device 101 may display an image for a left eye and an image for a right eye corresponding to the work space including the second object varied corresponding to the detected user motion 2430. In other words, the electronic device 101 may process an independent work space for editing or manipulating an object to be positioned at a different distance from the existing VR screen as described above. For example, the electronic device 101 may process the work space to be recognized to be positioned where it can be reached by the user's hand, allowing the user to recognize as if he/she edits or manipulates the object within his/her reach.

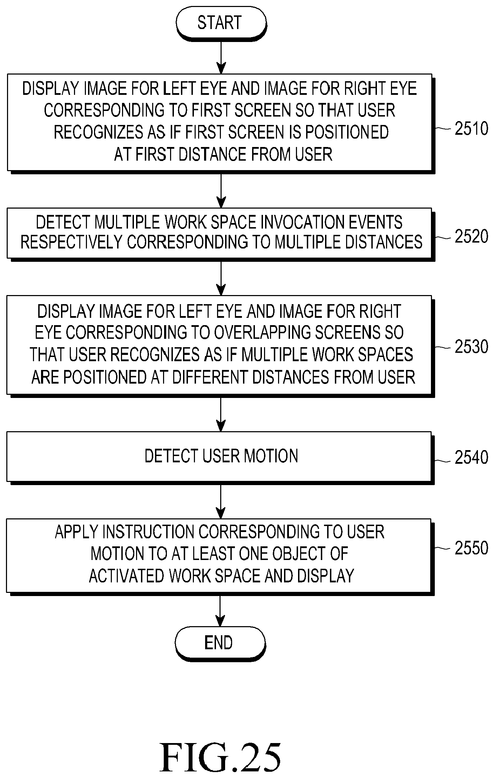

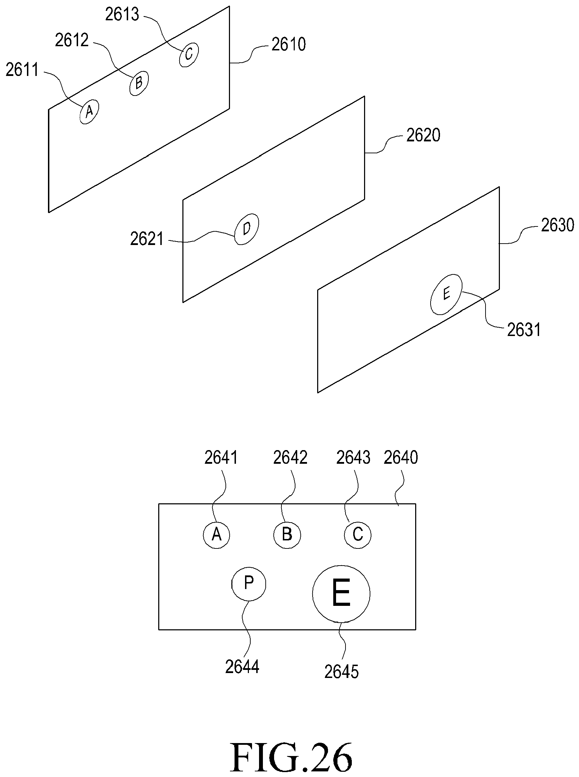

FIG. 25 is a flowchart illustrating a method for controlling an electronic device according to an embodiment of the present disclosure. The embodiment shown in FIG. 25 is described in further detail with reference to FIG. 26. FIG. 26 is a concept view illustrating a plurality of work spaces according to an embodiment of the present disclosure.

Referring to FIGS. 25 and 26, the electronic device 101 may display an image for a left eye and an image for a right eye corresponding to the first screen so that the user recognizes the first screen as if the first screen is positioned at a first distance from the user, in operation 2510. In operation 2520, the electronic device 101 may detect a plurality of work space invocation events respectively corresponding to a plurality of distances. In operation 2530, the electronic device 101 may display an image for a left eye and an image for a right eye corresponding to a plurality of overlapping screens so that the user recognizes a plurality of work spaces as if the work spaces are positioned at different distances, respectively. For example, the electronic device 101 may display a VR screen 2640 obtained by surface-flingering a first screen 2610 including first objects 2611, 2612, and 2613, a first work space 2620 including a second object 2621, and a second work space 2630 including a second object 2631, as shown in FIG. 26. The VR screen 2640 may include a plurality of first objects 2641, 2642, and 2643 and second objects 2644 and 2645 which have been graphically processed to be recognized to be relatively closer to the user than the plurality of first objects 2641, 2642, and 2643.

In operation 2540, the electronic device 101 may detect a user motion. In operation 2550, the electronic device 101 may apply an instruction corresponding to the user motion to at least one object of an activated work space and display the same. For example, the electronic device 101 may determine that the second work space 2630 processed to be recognized closest to the user is the activated work space, and the electronic device 101 may reflect that a received control command is applied to the second object 2645 included in the activated work space. Further, the electronic device 101 may also provide a function to change the activated work space from the second work space 2630 to the first work space 2620.

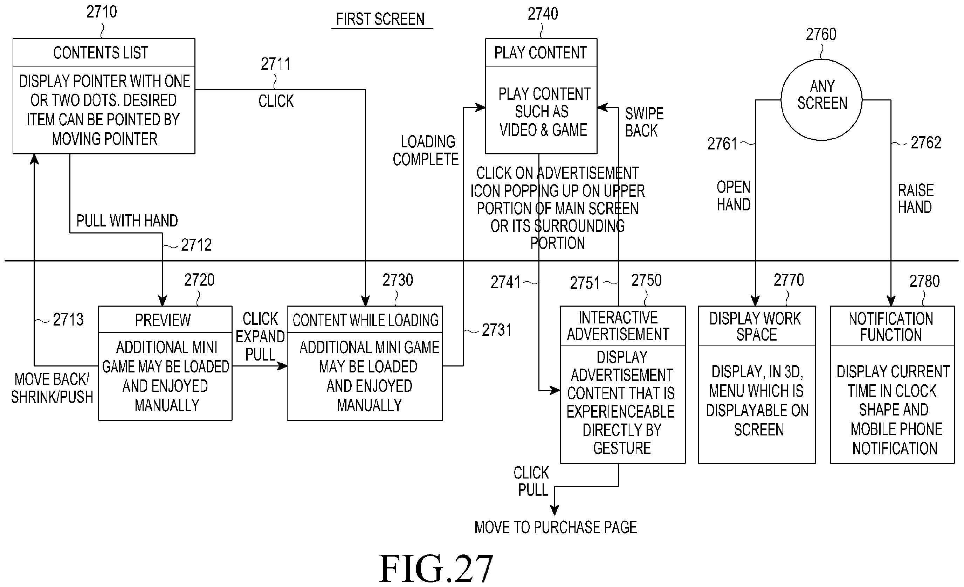

FIG. 27 is a concept view illustrating operations on a work space according to an embodiment of the present disclosure.

Referring to FIG. 27, the electronic device 101 may distinctively manage a first screen and a work space as described above in connection with FIG. 24. In operation 2710, the electronic device 101 may display a contents list on the first screen. The contents list may include a plurality of objects. Further, the electronic device 101 may display a pointer with one or two dots and provide a function to move the pointer. The electronic device 101 may receive a designation of the pointer and determine that the object positioned on the pointer has been designated.

In response to detecting the user's gesture of pulling with his/her hand in operation 2712, the electronic device 101 may provide a preview function for content in the work space, in operation 2720. The electronic device 101 may display preview content which is additionally displayed, i.e., the second object. Further, the electronic device 101 may control the preview content according to a control command additionally detected, e.g., the user's gesture using both hands. Further, the electronic device 101 may perform control so that the pointer hides from display. Further, in response to detecting the user's hand gesture of moving back, shrinking, or pushing in operation 2713, the electronic device 101 may display the first screen back. Further, in response to receiving a click command for the pointer on the first screen in operation 2711, the electronic device 101 may load an object for which the click command has been entered, in operation 2730. In this case, the electronic device 101 may display additional content on the work space while loading. For example, the electronic device 101 may display an object corresponding to a mini game while displaying the loading screen, and the electronic device 101 may reflect that the entered control command is applied thereto and display the same. The electronic device 101 may also display varied or other content corresponding to a click on the content being displayed on the work space or the user's gesture of expanding or pulling the content.

When the loading is done in operation 2731, the electronic device 101 may play the content, in operation 2740. For example, the electronic device 101 may play content, e.g., video or game. In operation 2741, the electronic device 101 may display an icon for advertisement popping up on an upper portion of the main screen, i.e., the screen where the content is being played, or its surrounding portion, and the electronic device 101 may detect a click on the icon. In operation 2750, the electronic device 101 may display an interactive advertisement in the work space. The interactive advertisement may mean advertisement content whose output is varied depending on control commands. The electronic device 101 may detect a gesture, i.e., a control command, vary the advertisement content being displayed according to the control command, and display the advertisement content so that the user can experience the same. In response to detecting a gesture of clicking or pulling, the electronic device 101 may move to a purchase page and display the same. In response to detecting a gesture, e.g., swiping back, in operation 2751, the electronic device 101 may stop displaying the interactive advertisement and play content.

Further, the electronic device 101 may display any screen, in operation 2760. In response to detecting the user's gesture of opening his/her hand, in operation 2761, the electronic device 101 may display a menu screen on the work space, in operation 2770. For example, the electronic device 101 may display a menu, which may be displayed on the screen, in 3D. For example, the electronic device 101 may display a tool for screen capture or a tool for volume control. In response to detecting the user's gesture of raising his/her hand, in operation 2762, the electronic device 101 may provide a notification function, in operation 2780. For example, the electronic device 101 may display an object, such as an object for notifying of the current time in a clock shape or a mobile phone notification.

According to an embodiment of the present disclosure, a method for controlling an electronic device may comprise displaying a first VR screen including a first object so that a user recognizes the first object as if the first object is positioned at a first distance from the user, in response to detecting an invocation event for a second object, displaying a second VR screen including the second object so that the user recognizes the second object as if the second object is positioned at a second distance from the user, and in response to receiving a control command for the second object, displaying a third VR screen comprising the second object to which the control command is applied.

According to an embodiment of the present disclosure, the second object may be set corresponding to the first object, and displaying the second VR screen in response to detecting the invocation event for the second object may include displaying the second VR screen when the first object is designated.

According to an embodiment of the present disclosure, the second object may be an object that corresponds to the first object and that may be manipulated in 3D.

According to an embodiment of the present disclosure, displaying the third VR screen comprising the second object to which the control command is applied may include, in response to receiving the control command to change an orientation of the second object, displaying the third VR screen including the second object of which orientation is changed according to the control command.

According to an embodiment of the present disclosure, the second object may be an object obtained by changing a display property of the first object.

According to an embodiment of the present disclosure, the second object may be set independently from the first object.

According to an embodiment of the present disclosure, displaying the first VR screen may include displaying an image for a left eye and an image for a right eye corresponding to the first VR screen, displaying the second VR screen may include displaying an image for the left eye and an image for the right eye corresponding to the second VR screen, and displaying the third VR screen may include displaying an image for the left eye and an image for the right eye corresponding to the third VR screen.

According to an embodiment of the present disclosure, displaying the third VR screen where the control command has applied to the second object in response to receiving the control command for the second object may include detecting a gesture of the user and determining the control command corresponding to the gesture.

According to an embodiment of the present disclosure, a method for controlling an electronic device may comprise displaying a first VR screen including a first object so that a user recognizes the first object as if the first object is positioned at a first distance from the user, in response to detecting an invocation event for a work space, displaying a second VR screen including a first work space so that the user recognizes the first work space as if the first work space is positioned at a second distance from the user, applying a received control command to a second object included in the first work space, and displaying a third VR screen including the control command-applied second object on the display.

According to an embodiment of the present disclosure, the method may further comprise detecting the user's gesture. Applying a received control command to a second object may include determining the control command corresponding to the gesture.

According to an embodiment of the present disclosure, displaying the second VR screen may include, in response to detecting an invocation event for the work space, displaying a second VR screen including the first work space and a second work space so that the user recognizes the second work space as if the second work space is positioned at a third distance from the user.

According to an embodiment of the present disclosure, applying the received control command to a second object may include applying the control command to an object of an activated work space of the first work space and the second work space.

According to an embodiment of the present disclosure, there is provided a storage medium storing commands that are executed by at least one processor to enable the at least one processor to perform at least one operation that comprises displaying a first VR screen including a first object so that a user recognizes the first object as if the first object is positioned at a first distance from the user, in response to detecting an invocation event for a second object, displaying a second VR screen including the second object so that the user recognizes the second object as if the second object is positioned at a second distance from the user, and in response to receiving a control command for the second object, displaying a third VR screen where the control command has applied to the second object.

According to an embodiment of the present disclosure, there is provided a storage medium storing commands that are executed by at least one processor to enable the at least one processor to perform at least one operation that comprises displaying a first VR screen including a first object so that a user recognizes the first object as if the first object is positioned at a first distance from the user, in response to detecting an invocation event for a work space, displaying a second VR screen including a first work space so that the user recognizes the first work space as if the first work space is positioned at a second distance from the user, applying a received control command to a second object included in the first work space, and displaying a third VR screen including the control command-applied second object on the display.

As is apparent from the foregoing description, according to an embodiment of the present disclosure, there may be provided an electronic device for providing a function to enable manipulation or preview of a particular object and a method for controlling the electronic device. According to an embodiment of the present disclosure, there may also be provided an electronic device for providing an independent work space to enable manipulation or preview of a particular object and a method for controlling the electronic device.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a display; and
a processor configured to:
control to display a first virtual reality (VR) screen including a first object on the display so that a user recognizes the first object as if the first object is positioned at a first distance from the user,
in response to detecting an invocation event for a second object, control to display a second VR screen including the second object on the display so that the user recognizes the second object as if the second object is positioned at a second distance from the user, and
in response to receiving a control command for the second object, control to display, on the display, a third VR screen comprising the second object to which the control command is applied.

2. The electronic device of claim 1,
wherein the second object is set corresponding to the first object, and
wherein the processor is further configured to, when the first object is designated, control to display the second VR screen on the display.

3. The electronic device of claim 2, wherein the second object comprises an object that corresponds to the first object and that is able to be manipulated three dimensionally.

4. The electronic device of claim 2, wherein the second object comprises an object that has been graphically processed to be recognized closer in distance from the user than the first object.

5. The electronic device of claim 3, wherein the processor is further configured to, in response to receiving a control command to change an orientation of the second object, control to display the third VR screen including the second object of which the orientation is changed according to the control command.

6. The electronic device of claim 2, wherein the second object comprises an object obtained by changing a display property of the first object.

7. The electronic device of claim 1, wherein the second object is set independently from the first object.

8. The electronic device of claim 1, wherein the processor is further configured to:
when displaying the first VR screen, control to display an image for a left eye and an image for a right eye corresponding to the first VR screen,
when displaying the second VR screen, control to display an image for the left eye and an image for the right eye corresponding to the second VR screen, and
when displaying the third VR screen, control to display an image for the left eye and an image for the right eye corresponding to the third VR screen.

9. The electronic device of claim 1, wherein the processor is further configured to:
detect a gesture of the user, and
determine the control command corresponding to the gesture.

10. A method for controlling an electronic device, the method comprising:
displaying a first virtual reality (VR) screen including a first object so that a user recognizes the first object as if the first object is positioned at a first distance from the user;
in response to detecting an invocation event for a second object, displaying a second VR screen including the second object so that the user recognizes the second object as if the second object is positioned at a second distance from the user; and
in response to receiving a control command for the second object, displaying a third VR screen comprising the second object to which the control command is applied.

11. The method of claim 10,
wherein the second object is set corresponding to the first object, and
wherein displaying the second VR screen in response to detecting the invocation event for the second object includes displaying the second VR screen when the first object is designated.

12. The method of claim 11, wherein the second object comprises an object that corresponds to the first object and that be manipulated three dimensionally.

13. The method of claim 12, wherein displaying the third VR screen comprising the second object to which the control command is applied includes, in response to receiving a control command to change an orientation of the second object, displaying the third VR screen including the second object of which orientation is changed according to the control command.

14. The method of claim 11, wherein the second object comprises an object obtained by changing a display property of the first object.

15. The method of claim 10, wherein the second object is set independently from the first object.
